(19) **Europäisches Patentamt**
**European Patent Office**
**Office européen des brevets**

(11) **EP 4 428 563 A1**

(12) **EUROPEAN PATENT APPLICATION**
published in accordance with Art. 153(4) EPC

(43) Date of publication:
**11.09.2024 Bulletin 2024/37**

(21) Application number: **22919043.4**

(22) Date of filing: **14.12.2022**

(51) International Patent Classification (IPC):
**G01S 5/06** (2006.01)     **H04W 64/00** (2009.01)
**H04L 7/00** (2006.01)      **H04W 88/02** (2009.01)

(52) Cooperative Patent Classification (CPC):
**G01S 5/06; H04L 7/00; H04W 64/00; H04W 88/02**

(86) International application number:
**PCT/KR2022/020305**

(87) International publication number:
**WO 2023/132506 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2022 KR 20220002305
16.02.2022 KR 20220020266**

(71) Applicant: **Samsung Electronics Co., Ltd.
Suwon-si, Gyeonggi-do 16677 (KR)**

(72) Inventors:
• **KIM, Minseuk**
  **Suwon-si, Gyeonggi-do 16677 (KR)**
• **KIM, Hyunchul**
  **Suwon-si, Gyeonggi-do 16677 (KR)**
• **YOON, Sejong**
  **Suwon-si, Gyeonggi-do 16677 (KR)**
• **KANG, Moonseok**
  **Suwon-si, Gyeonggi-do 16677 (KR)**

(74) Representative: **Nederlandsch Octrooibureau
P.O. Box 29720
2502 LS The Hague (NL)**

(54) **ELECTRONIC DEVICE AND POSITION MEASUREMENT METHOD USING SAME**

(57)     An electronic device, according to various embodiments of the present disclosure, may: receive a message including time information from each of a plurality of external electronic devices; compensate for a clock skew between the electronic device and the plurality of external electronic devices, on the basis of the received message including the time information received from each of the plurality of external electronic devices; and calculate an arrival time difference between the electronic device and the plurality of external electronic devices, on the basis of the compensated clock skew.

FIG. 8

**Description**

[Technical Field]

The disclosure relates to an electronic device and a method for measuring a position by using the same.

[Background Art]

Along with the recent development of wireless communication technology, electronic devices are widely used in everyday life, and thus the level of user demand therefor has become higher. Various types of wireless communication technologies may be used for satisfying the level of user demand. For example, the wireless communication technologies may include at least one of ultra-wideband (UWB) communication, wireless fidelity (Wi-Fi) communication, fifth generation (5G) communication (or new radio (NR) communication), or Bluetooth communication. Particularly, an electronic device may measure a position (or range or angle) of at least one external electronic device by using ultra-wideband (UWB) communication. By way of example, the electronic device may broadcast a message for measuring a range and receive a response message from at least one external electronic device which has received the message. The electronic device may measure a position (or range or angle) of the at least one external electronic device based on the message for measuring a range and the response message of the at least one external electronic device.

[Disclosure of Invention]

[Technical Problem]

An electronic device may receive messages for measuring a position from external electronic devices to measure a position of the electronic device. However, in a non-line of sight (NLoS) state in which an obstacle exists between the electronic device and the at least one external electronic device, in case that link quality for receiving a message is not adequate, the electronic device may incorrectly calculate time difference of arrival (TDoA) with the external electronic device. Accordingly, dilution of precision indicating error performance may be deteriorated and thus the position of the electronic device may be measured incorrectly.

Aspects of the disclosure are to address at least the above-mentioned problems and/or disadvantages and to provide at least the advantages described below. Accordingly, an aspect of the disclosure is to provide an electronic device to receive a message including time information from each of multiple external electronic devices. Based on the message including the time information received from each of multiple external electronic devices, the electronic device may compensate for a clock drift between the electronic device and the multiple external electronic devices and calculate a time difference of arrival between the electronic device and the multiple external electronic devices, based on the compensated clock drift.

[Solution to Problem]

In accordance with an aspect of the disclosure, an electronic device is provided. The electronic device includes a communication circuit, a memory, and a processor operatively connected to the communication circuit and the memory, wherein the processor may be configured to transmit a first message for range measurement in a first range measurement period through the communication circuit, receive a second message including a first response time and transmitted by a first external electronic device through the communication circuit in response to the first message, receive a third message including a second response time and a third response time and transmitted by a second external electronic device through the communication circuit in response to the first message, and receive a fourth message including a fourth response time, a fifth response time, and a sixth response time and transmitted by a third external electronic device through the communication circuit in response to the first message, and wherein the first response time may be a difference between a reception time when the first external electronic device receives the first message and a transmission time of the second message, the second response time may be a difference between a reception time when the second external electronic device receives the first message and a transmission time of the third message, the third response time may be difference between a reception time when the second external electronic device receives the second message and a transmission time of the third message, the fourth response time may be a difference between a reception time when the third external electronic device receives the first message and a transmission time of the fourth message, the fifth response time may be a difference between a reception time when the third external electronic device receives the second message and a transmission time of the fourth message, and the sixth response time may be a difference between a reception time when the third external electronic device receives the third message and a transmission time of the fourth message.

In accordance with another aspect of the disclosure, an electronic device is provided. The electronic device includes a communication circuit, a memory, and a processor operatively connected to the communication circuit and the memory, wherein the processor may be configured to, when a first message for range measurement transmitted by a first external electronic device is received through the communication circuit, store a reception time of the first message in the memory, when a second message including a first response time is received from a second external electronic device through the communication circuit in response to the first message, store a reception time and a transmission time of the second message in the memory, when a third message including a second response time and a third response time is received from a third external electronic device in response to the first message, store a reception time and a transmission time of the third message in the memory, and when a fourth message including a fourth response time, a fifth response time, and a sixth response time is received from a fourth external electronic device in response to the first message, store a reception time and a transmission time of the fourth message in the memory.

In accordance with another aspect of the disclosure, a method for measuring a position of an electronic device is provided. The method includes an operation of transmitting a first message for range measurement in a first range measurement period through the communication circuit, an operation of receiving a second message including a first response time and transmitted by a first external electronic device through the communication circuit in response to the first message, an operation of receiving a third message including a second response time and a third response time and transmitted by a second external electronic device through the communication circuit in response to the first message, and an operation of receiving a fourth message including a fourth response time, a fifth response time, and a sixth response time and transmitted by a third external electronic device through the communication circuit in response to the first message, and wherein the first response time may be a difference between a reception time when the first external electronic device receives the first message and a transmission time of the second message, the second response time may be a difference between a reception time when the second external electronic device receives the first message and a transmission time of the third message, the third response time may be difference between a reception time when the second external electronic device receives the second message and a transmission time of the third message, the fourth response time may be a difference between a reception time when the third external electronic device receives the first message and a transmission time of the fourth message, the fifth response time may be a difference between a reception time when the third external electronic device receives the second message and a transmission time of the fourth message, and the sixth response time may be a difference between a reception time when the third external electronic device receives the third message and a transmission time of the fourth message.

In accordance with another aspect of the disclosure, a method for measuring a position of an electronic device is provided. The method includes, when a first message for range measurement transmitted by a first external electronic device is received through the communication circuit, an operation of storing a reception time of the first message in the memory, when a second message including a first response time is received from a second external electronic device through the communication circuit in response to the first message, an operation of storing a reception time and a transmission time of the second message in the memory, when a third message including a second response time and a third response time is received from a third external electronic device in response to the first message, an operation of storing a reception time and a transmission time of the third message in the memory, and when a fourth message including a fourth response time, a fifth response time, and a sixth response time is received from a fourth external electronic device in response to the first message, an operation of storing a reception time and a transmission time of the fourth message in the memory.

In accordance with another aspect of the disclosure, a positioning system is provided. The positioning system includes an electronic device and N number of external electronic devices, wherein a first external electronic device among the N number of external electronic devices may transmit a first message for range measurement in a first range measurement period, second to N-th external electronic devices among the N number of external electronic devices may transmit second to N-th messages in response to the first message, and the electronic device may receive the first message and the second to N-th messages, calculate a time difference of arrival with the N number of external electronic devices, based on a reception time of the received first message and time information included in each of the second to N-th messages, and measure a position of the electronic device, based on the calculated time difference of arrival, and wherein the time information included in the second message may include a reception time when the second external electronic device receives the first message, a transmission time of the second message, and/or a first response time with respect to a difference between the reception time when the second external electronic device receives the first message and the transmission time of the second message and time information included in the N-th message may include a reception time when the N-th external electronic device receives the first message, a transmission time of the N-th message, a second response time with respect to a difference between the reception time of the first message and the transmission time of the N-th message, a reception time when the N-th external electronic device receives the second message, a third response time with respect to a difference between the reception time of the second message and the transmission time of the N-th message, a reception time when the N-th external electronic device receives an (N-1)th message transmitted by an (N-1)th external electronic device, and/or an M-th response time with respect to a difference between the reception time of the (N-1)th message and the transmission time of the N-th message.

[Advantageous Effects of Invention]

An electronic device according to various embodiments of the disclosure may compensate for a clock error between the electronic device and multiple external electronic devices and calculate a time difference of arrival, based on a message including time information received from each of the multiple external electronic devices. As the time difference of arrival with multiple external electronic devices may be calculated, the electronic device may measure a position of the electronic device in a mesh network form. Accordingly, the electronic device may correctly measure a position of the electronic device in a non-line of sight (NLoS) state in which an obstacle exists between the electronic device and at least one external electronic device or in a state in which link quality is not good.

[Brief Description of Drawings]

FIG. 1 is a block diagram illustrating an electronic device in a network environment according to an embodiment of the disclosure;
FIG. 2 is a diagram illustrating an example of system configuration according to an embodiment of the disclosure;
FIG. 3 is a block diagram illustrating an external electronic device according to an embodiment of the disclosure;
FIG. 4A is a flowchart illustrating an operation of a first external electronic device according to an embodiment of the disclosure;
FIG. 4B is a flowchart illustrating an operation of a first external electronic device according to an embodiment of the disclosure;
FIG. 5A is a flowchart illustrating an operation of an external electronic device according to an embodiment of the disclosure;
FIG. 5B is a flowchart illustrating an operation of an external electronic device according to an embodiment of the disclosure;
FIG. 6A is a flowchart illustrating an operation of an electronic device according to an embodiment of the disclosure;
FIG. 6B is a flowchart illustrating an operation of an electronic device according to an embodiment of the disclosure;
FIG. 7 is a diagram illustrating a signal flow between an electronic device and multiple external electronic devices according to an embodiment of the disclosure;
FIG. 8 is a diagram illustrating a signal flow between an electronic device and multiple external electronic devices according to an embodiment of the disclosure;
FIG. 9 is a diagram illustrating a signal flow between an electronic device and multiple external electronic devices according to an embodiment of the disclosure;
FIG. 10 is a diagram for explaining a method for calculating a time difference of arrival between an electronic device and multiple external electronic devices according to an embodiment of the disclosure;
FIG. 11 is a diagram for explaining a method for calculating a time difference of arrival between an electronic device and multiple external electronic devices according to an embodiment of the disclosure;
FIG. 12 is a diagram for explaining a method for calculating a time difference of arrival between an electronic device and multiple external electronic devices according to an embodiment of the disclosure; and
FIG. 13 is a diagram illustrating a signal flow between an electronic device and multiple external electronic devices according to an embodiment of the disclosure.

[Mode for the Invention]

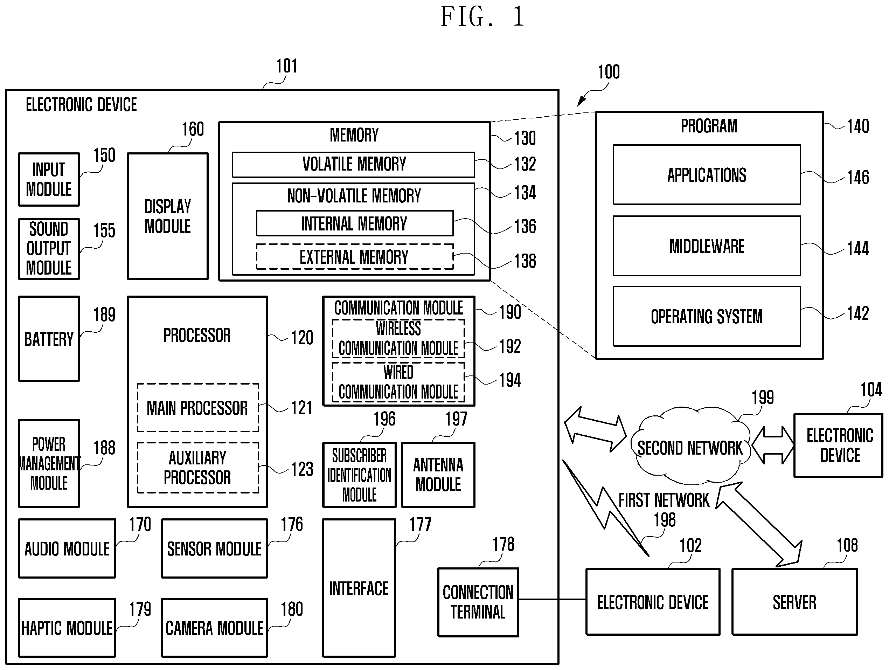

FIG. 1 is a block diagram illustrating an electronic device in a network environment according to an embodiment of the disclosure.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the displays, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1 st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

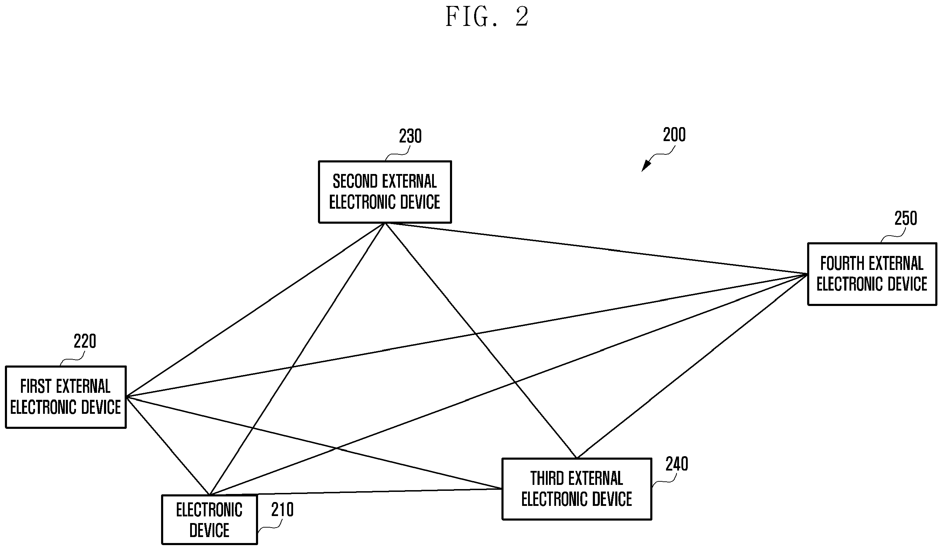

FIG. 2 is a diagram illustrating an example of system configuration according to an embodiment of the disclosure.

Referring to FIG. 2, a diagram 200, a first external electronic device 220, a second external electronic device 230, a third external electronic device 240, and/or a fourth external electronic device 250 may form a cluster.

In various embodiments, the first external electronic device 220 may function as an initiator and may be a device configured to start positioning by transmitting a first message (e.g., a poll message). The second external electronic device 230, the third external electronic device 240, and the fourth external electronic device 250 may function as responders and may be devices configured to transmit a second message (e.g., a response message) in response to a first message (e.g., a poll message) received from the first external electronic device (e.g., an initiator). In case of entering the cluster, the electronic device 210 may be a device configured to receive messages transmitted or received among the first external electronic device 220, the second external electronic device 230, the third external electronic device 240, and the fourth external electronic device 250 so as to measure a position of itself (e.g., a position of the electronic device 210).

In an embodiment, the first external electronic device 220 may broadcast a first message (e.g., a poll message) for measuring a range through a predetermined communication. The predetermined communication may include ultra-wide band (UWB) communication. The UWB communication may include communication for measuring a range (or position) between the first external electronic device 220 and at least one other external electronic device in a two-way ranging (TWR) manner between the first external electronic device 220 and the at least one other external electronic device.

For example, the TWR manner may include a single side TWR (SS-TWR) manner or a double side TWR (DS-TWR) manner. The SS-TWR manner may be a manner in which when the first external electronic device 220 transmits a first message (e.g., a poll message) to other external electronic devices (e.g., at least one of the second external electronic device 230, the third external electronic device 240, or the fourth external electronic device 250), the other external electronic devices (e.g., at least one of the second external electronic device 230, the third external electronic device 240, or the fourth external electronic device 250) may transmit a second message (e.g., a response message) to the first external electronic device 220. The electronic device 210 may receive the first message and the second message transmitted or received among external electronic devices and, based thereon, measure (or calculate) a range between the electronic device 210 and the other external electronic devices (e.g., at least one of the first external electronic device 220, the second external electronic device 230, the third external electronic device 240, or the fourth external electronic device 250). The poll message may be transmitted in a packet form. In the SS-TWR, the first external electronic device 220 may measure (or calculate) a range to an external electronic device based on difference between a transmission time of a first message (e.g., a poll message) and a reception time of a second message (e.g., a response message) from another external electronic device.

For example, in the DS-TWR manner, when the first external electronic device 220 transmit a first message (e.g., a poll message), other external electronic devices (e.g., at least one of the second external electronic device 230, the third external electronic device 240, or the fourth external electronic device 250) may transmit a second message (e.g., a response message) to the first external electronic device 220. The first external electronic device 220 may transmit a third message (e.g., a final message) including a response time which is calculated based on a difference between a transmission time of the first message and a reception time of the second message received from other external electronic device, to other external electronic device in response to the second message. The electronic device 210 may receive the first message, the second message, the third message, transmitted or received among external electronic devices and may measure a range between the electronic device 210 and the other external electronic devices (e.g., at least one of the first external electronic device 220, the second external electronic device 230, the third external electronic device 240, or the fourth external electronic device 250).

In various embodiments, a transmission time of the first message (e.g., a poll message), the second message (e.g., a response message), and the third message (e.g., a final message) by the electronic device 210 existing in a mesh network and at least one external electronic device (220, 230, 240, and/or 250) may be configured in advance. For example, the first range measurement period (e.g., a first ranging round) may be formed of multiple ranging slots (not shown). Each ranging slot (not shown) may indicate a time period for transmitting one ranging frame. For example, the ranging round may include a first slot (e.g., a first period) which is a time point when the first external electronic device 220 transmits the first message (e.g., a poll message), a second slot (e.g., a second period) which is a time point when the second external electronic device 230 having received the first message transmits the second message (e.g., a response message), a third slot (e.g., a third period) which is a time point when the third external electronic device 240 having received the first message transmits the third message (e.g., a response message), and a fourth slot (e.g., a fourth period) which is a time point when the fourth external electronic device 250 having received the first message transmits a fourth message (e.g., a response message). However, it is not limited thereto, and the ranging round may further include a fifth slot (e.g., a fifth period) (e.g., an idle period) when the first external electronic device 220 enters a sleep state.

In various embodiments, it has been described that the second external electronic device 230 transmits the second message (e.g., a response message) in the second slot, the third external electronic device 240 transmits the third message (e.g., a response message) in the third slot, and the fourth external electronic device 250 transmits the fourth message (e.g., a response message) in the fourth slot, but is not limited thereto. For example, the order of when a message (e.g., a response message) is transmitted by the second external electronic device 230, the third external electronic device 240, and the fourth external electronic device 250 may be configured randomly.

In another embodiment, in order to receive a response message from at least one other external electronic device, at least one external electronic device existing in the cluster may activate (or turn on) a communication circuit, such as a UWB module, during a range measurement period. As the UWB module is activated (or turned on), at least one external electronic device may receive a message transmitted to/received from at least one other external electronic device. In addition, as the UWB module is activated (or turned on), at least one external electronic device may receive a message that at least two other external electronic devices broadcast, or receive a message that at least two other external electronic devices transmit/receive in a unicasting manner by snipping.

In another embodiment, the electronic device 210 may activate (or turn on) a communication circuit, for example, a UWB module, in a range measurement period, and accordingly, may receive a message that multiple external electronic devices broadcast or receive a message that multiple external electronic devices transmit/receive in a unicasting manner by snipping so that the electronic device 210 may use the message to measure a position.

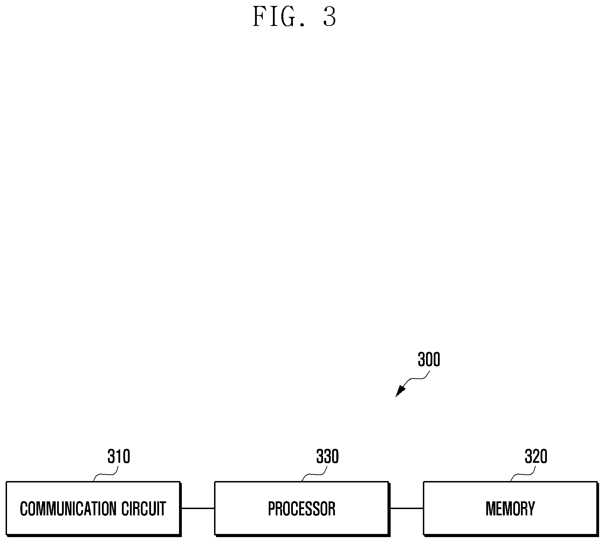

FIG. 3 is a block diagram illustrating an external electronic device according to an embodiment of the disclosure.

Referring to FIG. 3, in a block diagram 300, an external electronic device according to various embodiments may be the fourth external electronic device 250 in FIG. 2 described above. However, it is not limited thereto, and the external electronic device shown in FIG. 3 may be the second external electronic device 230 or the third external electronic device 240 in FIG. 2 described above.

Referring to FIG. 3, the fourth external electronic device 250 may include a communication circuit 310 (e.g., the communication module 190 in FIG. 1), a memory 320 (e.g., the memory 130 in FIG. 1), and/or a processor 330 (the processor 120 in FIG. 1).

In various embodiments, the communication circuit 310 (e.g., the communication module 190 in FIG. 1) may support connection to at least one electronic device (e.g., at least one of the electronic device 210, the first external electronic device 220, the second external electronic device 230, or the third external electronic device 240 in FIG. 2). The communication circuit 310 may include a near field communication circuit, and the near field communication circuit may include at least one of Bluetooth, Bluetooth low energy (BLE), an ultra-wide band (UWB), or Wi-Fi.

In an embodiment, the fourth external electronic device 250 may control activation of UWB communication by using a low energy communication module, such as Bluetooth low energy (BLE). Without limitation thereto, the fourth external electronic device 250 may control activation of UWB communication by using Wi-Fi, UWB in-band discovery scheme, or out-of-band.

In various embodiments, the memory 320 (e.g., the memory 130 in FIG. 1) may perform at least one of a storage function of a program (e.g., the program 140 in FIG. 1) for process and control of the processor 330 of the external electronic device, an operating system (OS) (e.g., the operating system 142 in FIG. 1), various applications, or input/output data, and may store a program for controlling overall operations of the fourth external electronic device 250. The memory 320 may store various pieces of configuration information required for the fourth external electronic device 250 to process functions related to various embodiments of the disclosure.

In an embodiment, the memory 320 may store time information of messages transmitted/received among external electronic devices (e.g., at least one of the first external electronic device 220, the second external electronic device 230, the third external electronic device 240, or the fourth external electronic device 250). The time information may include a reception time when each external electronic device receives a message transmitted from other external electronic device, and/or a transmission time when each external electronic device transmits a message, and/or a response time.

In various embodiments, the processor 330 (e.g., the processor 120 in FIG. 1) may include a micro controller unit (MCU) and may drive an operating system (OS) or an embedded software program to control multiple hardware components connected to the processor 330. The processor 330 may control multiple hardware components according to instructions (e.g., the program 140 in FIG. 1) stored in the memory 320.

In various embodiments, when a first message (e.g., a poll message) for range measurement is received from the first external electronic device 220, the processor 330 may store a reception time of the first message in the memory 320. When a second message (e.g., a response message) including a first response time and transmitted by the second external electronic device 230 is received in response to the first message, the processor 330 may store a reception time of the second message in the memory 320. For example, the first response time may be calculated based on a reception time when the second external electronic device 230 receives the first message transmitted from the first external electronic device 220 and a transmission time of the second message transmitted by the second external electronic device 230. When a third message (e.g., a response message) including a second response time and a third response time and transmitted by the third external electronic device 240 is received in response to the first message, the processor 330 may store a reception time of the third message in the memory 320. For example, the second response time may be calculated based on a reception time when the third external electronic device 240 receives the first message transmitted from the first external electronic device 220 and a transmission time of the third message to be transmitted by the third external electronic device 240 in response to the first message. The third response time may be calculated based on a reception time when the third external electronic device 240 receives the second message transmitted from the second external electronic device 230 and a transmission time of the third message to be transmitted by the third external electronic device 240.

In an embodiment, the processor 330 may transmit, to the first external electronic device 220, a fourth message (e.g., a response message) including fourth, fifth, and sixth response times and a transmission time of the fourth message to be transmitted in response to the first message. For example, the fourth response time may be calculated based on a reception time when the fourth external electronic device 250 receives the first message transmitted from the first external electronic device 220 and a transmission time of the fourth message (e.g., a response message) to be transmitted in response to the first message. The fifth response time may be calculated by the fourth external electronic device 250 based on a reception time of the second message received from the second external electronic device 230 and a transmission time of the fourth message. The sixth response time may be calculated based on a reception time when the fourth external electronic device 250 receives the third message received from the third external electronic device 240 and a transmission time of the fourth message.

In another embodiment, when the fifth message including a transmission time is received from the first external electronic device 220, the processor 330 may store a reception time of the fifth message in the memory 320. The fifth message may be a final message. The fifth message may further include a seventh response time calculated based on a reception time of the second message which is received by the first external electronic device 220 from the second external electronic device 230 and a transmission time of the fifth message transmitted by the first external electronic device 220, an eighth response time calculated based on a reception time of the third message which is received by the first external electronic device 220 from the third external electronic device 240 and a transmission time of the fifth message transmitted by the first external electronic device 220, and a ninth response time calculated based on a reception time of the fourth message which is received by the first external electronic device 220 from the fourth external electronic device 250 and a transmission time of the fifth message transmitted by the first external electronic device 220.

In another embodiment, when a sixth message (e.g., a response message) including a transmission time and transmitted by the second external electronic device 230 is received in response to the fifth message, the processor 330 may store a reception time of the sixth message in the memory 320. The sixth message may further include a tenth response time calculated based on a reception time of the third message which is received by the first external electronic device 220 from the third external electronic device 240 and a transmission time of the sixth message transmitted by the second external electronic device 230, an eleventh response time calculated based on a reception time of the fourth message which is received by the second external electronic device 230 from the fourth external electronic device 250 and a transmission time of the sixth message transmitted by the second external electronic device 230, and a twelfth response time calculated based on a reception time of the fifth message which is received by the second external electronic device 230 from the first external electronic device 220 and a transmission time of the sixth message transmitted by the second external electronic device 230.

In another embodiment, when a seventh message (e.g., a response message) including a transmission time and transmitted by the third external electronic device 240 is received in response to the fifth message, the processor 330 may store a reception time of the seventh message in the memory 320. The seventh message may further include a thirteenth response time calculated based on a reception time of the fourth message which is received by the third external electronic device 240 from the fourth external electronic device 250 and a transmission time of the seventh message transmitted by the third external electronic device 240, a fourteenth response time calculated based on a reception time of the fifth message which is received by the third external electronic device 240 from the first external electronic device 220 and a transmission time of the seventh message transmitted by the third external electronic device 240, and a fifteenth response time calculated based on a reception time of the sixth message which is received by the third external electronic device 240 from the second external electronic device 230 and a transmission time of the seventh message transmitted by the third external electronic device 240.

In another embodiment, the processor 330 may transmit, to the first external electronic device 220, the eighth message (e.g., a response message) including a transmission time, in response to the fifth message. The eighth message may further include a sixteenth response time calculated based on a reception time of the fifth message which is received by the fourth external electronic device 250 from the first external electronic device 220 and a transmission time of the eighth message transmitted by the fourth external electronic device 250, a seventeenth response time calculated based on a reception time of the sixth message which is received by the fourth external electronic device 250 from the second external electronic device 230 and a transmission time of the eighth message transmitted by the fourth external electronic device 250, and an eighteenth response time calculated based on a reception time of the seventh message which is received by the fourth external electronic device 250 from the third external electronic device 240 and a transmission time of the eighth message transmitted by the fourth external electronic device 250.

In various embodiments, although not shown in drawings, at least one of the electronic device 210, the first external electronic device 220, the second external electronic device 230, or the third external electronic device 240 may include at least one of a communication circuit, a memory, or a processor like the fourth external electronic device 250.

In case that at least one of the first external electronic device 220, the second external electronic device 230, or the third external electronic device 240 include at least one of a communication circuit, a memory, or processor like the fourth external electronic device 250, operations of the at least one of the second external electronic device 230 or the third external electronic device 240 may be similar to the operations of the at least one of the communication circuit 310, the memory 320, or the processor 330 of the fourth external electronic device 250.

In various embodiments, the communication circuit of the electronic device 210 may support to receive messages transmitted or received among multiple external electronic devices (e.g., the first external electronic device 220, the second external electronic device 230, the third external electronic device 240, and/or the fourth external electronic device 250 in FIG. 2).

In an embodiment, the memory 320 of the electronic device may store time information of messages transmitted or received among external electronic devices (e.g., the at least one of the first external electronic device 220, the second external electronic device 230, the third external electronic device 240, or the fourth external electronic device 250). The time information may include a reception time when each external electronic device receives a message transmitted from other external electronic device, and/or a transmission time when each external electronic device transmits a message, and/or a response time.

In various embodiments, when a first message (e.g., a poll message) for range measurement is received from the first external electronic device 220, the processor of the electronic device 210 may store a reception time of the first message in the memory. When a second message including a first response time and transmitted by the second external electronic device 230 is received in response to the first message, the processor of the electronic device 210 may store a first response time, a reception time of the second message, and a transmission time of the second message in the memory. When a third message including second and third response times and transmitted by the third external electronic device 240 is received in response to the first message, the processor of the electronic device 210 may store the second and third response times, a reception time of the third message, and a transmission time of the third message in the memory. When a fourth message including fourth, fifth, and sixth response times and transmitted by the fourth external electronic device 250 is received in response to the first message, the processor of the electronic device 210 may store the fourth, fifth, and sixth response times, a reception time of the fourth message, and a transmission time of the fourth message in the memory. When a fifth message (e.g., a final message) is received from the first external electronic device 220, the processor of the electronic device 210 may store a reception time of the fifth message in the memory. When a sixth message including a transmission time and transmitted by the second external electronic device 230 is received in response to the fifth message, the processor of the electronic device 210 may store a reception time of the sixth message and a transmission time of the sixth message in the memory. When a seventh message including a transmission time and transmitted by the third external electronic device 240 is received in response to the fifth message, the processor of the electronic device 210 may store a reception time of the seventh message and a transmission time of the seventh message in the memory. When an eighth message including a transmission time and transmitted by the fourth external electronic device 250 is received in response to the fifth message, the processor of the electronic device 210 may store a reception time of the eighth message and a transmission time of the eighth message in the memory. The processor of the electronic device 210 may compensate for a clock drift with multiple external electronic devices, based on the reception times and transmission times of the first to fourth messages and reception times and transmission times of the fifth to eighth messages stored in the memory. The processor of the electronic device 210 may calculate a time difference of arrival (TDoA) with multiple external electronic devices based on the compensated clock drift and measure a position of the electronic device 210 based thereon.

An electronic device (e.g., the first external electronic device 220) according to various embodiments of the disclosure may include a communication circuit 310, a memory 320, and a processor 330 operatively connected to the communication circuit 310 and the memory 320, wherein the processor 330 may be configured to transmit a first message for range measurement in a first range measurement period through the communication circuit, receive a second message including a first response time and transmitted by a first external electronic device (e.g., the second external electronic device 230) through the communication circuit 310 in response to the first message, receive a third message including a second response time and a third response time and transmitted by a second external electronic device (e.g., the third external electronic device 240) through the communication circuit 310 in response to the first message, and receive a fourth message including a fourth response time, a fifth response time, and a sixth response time and transmitted by a third external electronic device (e.g., the fourth external electronic device 250) through the communication circuit 310 in response to the first message, and the first response time may being a difference between a reception time when the first external electronic device (e.g., the second external electronic device 230) receives the first message and a transmission time of the second message, the second response time may be a difference between a reception time when the second external electronic device (e.g., the third external electronic device 240) receives the first message and a transmission time of the third message, the third response time may be difference between a reception time when the second external electronic device (e.g., the third external electronic device 240) receives the second message and a transmission time of the third message, the fourth response time may be a difference between a reception time when the third external electronic device (e.g., the fourth external electronic device 250) receives the first message and a transmission time of the fourth message, the fifth response time may be a difference between a reception time when the third external electronic device (e.g., the fourth external electronic device 250) receives the second message and a transmission time of the fourth message, and the sixth response time may be a difference between a reception time when the third external electronic device (e.g., the fourth external electronic device 250) receives the third message and a transmission time of the fourth message.

In various embodiments, the processor 330 may be configured to transmit a fifth message including a seventh response time, an eighth response time, and a ninth response time through the communication circuit 310, when a sixth message including a transmission time and transmitted by the first external electronic device (e.g., the second external electronic device 230) is received through the communication circuit 310 in response to the fifth message, store a reception time of the sixth message, when a seventh message including a reception time and transmitted by the second external electronic device (e.g., the third external electronic device 240) is received through the communication circuit 310 in response to the fifth message, store a reception time of the seventh message, and when an eighth message including a transmission time and transmitted by the third external electronic device (e.g., the fourth external electronic device 250) is received through the communication circuit 310 in response to the fifth message, store a reception time of the eighth message.

In various embodiments, the seventh response time may be a difference between a reception time of the second message received from the first external electronic device (e.g., the second external electronic device 230) and a transmission time of the fifth message, the eighth response time may be a difference between a reception time of the third message received from the second external electronic device (e.g., the third external electronic device 240) and a transmission time of the fifth message, and the ninth response time may be a difference between a reception time of the fourth message received from the third external electronic device (e.g., the fourth external electronic device 250) and a transmission time of the fifth message.

In various embodiments, the sixth message may include a tenth response time which is calculated by the first external electronic device (e.g., the second external electronic device 230) with respect to a difference between a reception time of the third message which is received by the first external electronic device (e.g., the second external electronic device 230) from the second external electronic device (e.g., the third external electronic device 240) and a transmission time of the sixth message transmitted by the first external electronic device (e.g., the second external electronic device 230), an eleventh response time which is calculated by the first external electronic device (e.g., the second external electronic device 230) with respect to a difference between a reception time of the fourth message which is received by the first external electronic device (e.g., the second external electronic device 230) from the third external electronic device (e.g., the fourth external electronic device 250) and a transmission time of the sixth message transmitted by the first external electronic device (e.g., the second external electronic device 230), and a twelfth response time which is calculated by the first external electronic device (e.g., the second external electronic device 230) with respect to a difference between a reception time of the fifth message which is received by the first external electronic device (e.g., the second external electronic device 230) from the electronic device (e.g., the first external electronic device 220) and a transmission time of the sixth message transmitted by the first external electronic device (e.g., the second external electronic device 230).

In various embodiments, the seventh message may include a thirteenth response time which is calculated by the second external electronic device (e.g., the third external electronic device 240) with respect to a difference between a reception time of the fourth message which is received by the second external electronic device (e.g., the third external electronic device 240) from the third external electronic device (e.g., the fourth external electronic device 250) and a transmission time of the seventh message transmitted by the second external electronic device (e.g., the third external electronic device 240), a fourteenth response time which is calculated by the second external electronic device (e.g., the third external electronic device 240) with respect to a difference between a reception time of the fifth message which is received by the second external electronic device (e.g., the third external electronic device 240) from the electronic device (e.g., the first external electronic device 220) and a transmission time of the seventh message transmitted by the second external electronic device (e.g., the third external electronic device 240), and a fifteenth response time which is calculated by the second external electronic device (e.g., the third external electronic device 240) with respect to a difference between a reception time of the sixth message which is received by the second external electronic device (e.g., the third external electronic device 240) from the first external electronic device (e.g., the second external electronic device 230) and a transmission time of the seventh message transmitted by the second external electronic device (e.g., the third external electronic device 240).

In various embodiments, the eighth message may include a sixteenth response time which is calculated by the third external electronic device (e.g., the fourth external electronic device 250) with respect to a difference between a reception time of the fifth message which is received by the third external electronic device (e.g., the fourth external electronic device 250) from the electronic device (e.g., the first external electronic device 220) and a transmission time of the eighth message transmitted by the third external electronic device (e.g., the fourth external electronic device 250), a seventeenth response time which is calculated by the third external electronic device (e.g., the fourth external electronic device 250) with respect to a difference between a reception time of the sixth message which is received by the third external electronic device (e.g., the fourth external electronic device 250) from the first external electronic device (e.g., the second external electronic device 230) and a transmission time of the eighth message transmitted by the third external electronic device (e.g., the fourth external electronic device 250), and an eighteenth response time which is calculated by the third external electronic device (e.g., the fourth external electronic device 250) with respect to a difference between a reception time of the seventh message which is received by the third external electronic device (e.g., the fourth external electronic device 250) from the second external electronic device (e.g., the third external electronic device 240) and a transmission time of the eighth message transmitted by the third external electronic device (e.g., the fourth external electronic device 250).

In various embodiments, the processor 330 may be configured to store a reception time of the second message, a reception time of the third message, and a reception time of the fourth message in the memory 320.

In various embodiments, the processor 330 may be configured to, when the fifth message including a transmission time and transmitted by the first external electronic device

(e.g., the second external electronic device 230) is received through the communication circuit 310, store a reception time of the fifth message in the memory 320, when the sixth message including a reception time and transmitted by the second external electronic device (e.g., the third external electronic device 240) is received through the communication circuit 310, store a reception time of the sixth message in the memory 320, and when the seventh message including a transmission time and transmitted by the third external electronic device (e.g., the fourth external electronic device 250) is received through the communication circuit 310, store a reception time of the seventh message in the memory 320.

An electronic device 210 according to various embodiments may include a communication circuit 310, a memory 320, and a processor 330 operatively connected to the communication circuit 310 and the memory 320, wherein the processor 330 may be configured to, when a first message for range measurement transmitted by a first external electronic device 220 is received through the communication circuit 310, store a reception time of the first message in the memory 320, when a second message including a first response time is received from a second external electronic device 230 through the communication circuit 310 in response to the first message, store the first response time and a reception time and a transmission time of the second message in the memory 320, when a third message including a second response time and a third response time is received from a third external electronic device 240 in response to the first message, store the second response time, the third response time, and a reception time and a transmission time of the third message in the memory 320, and when a fourth message including a fourth response time, a fifth response time, and a sixth response time is received from a fourth external electronic device 250 in response to the first message, store the fourth response time, the fifth response time, the sixth response time, and a reception time and a transmission time of the fourth message in the memory 320.

In various embodiments, the processor 330 may be configured to calculate a time difference arrival between the electronic device 210 and the first external electronic device 220, the second external electronic device 230, the third external electronic device 240, and the fourth external electronic device 250 based on the first response time, the second response time, the third response time, the fourth response time, the fifth response time and the sixth response time, and measure a position of the electronic device 210 based on the calculated time difference of arrival.

In various embodiments, the processor 330 may be configured to compensate for a clock drift between the electronic device 210 and the first external electronic device 220, the second external electronic device 230, the third external electronic device 240, and the fourth external electronic device 250 based on the reception time of the first message, the reception time and transmission time of the second message, the reception time and transmission time of the third message, the reception time and transmission time of the fourth message, the reception time of the fifth message, the reception time and transmission time of the sixth message, the reception time and transmission time of the seventh message, and the reception time and transmission time of the eighth message, calculate a time difference of arrival (TDoA) between the electronic device 210 and the first external electronic device 220, the second external electronic device 230, the third external electronic device 240, and the fourth external electronic device 250 based on the compensated clock drift, and measure a position of the electronic device 210 based on positions of multiple external electronic devices, based on the calculated time difference of arrival.

In various embodiments, the processor 330 may be configured to, when the fifth message including a seventh response time, an eighth response time, and a ninth response time and transmitted by a first external electronic device 220 is received through the communication circuit 310, store a reception time of the fifth message in the memory 320, when a sixth message including a transmission time and transmitted by the second external electronic device 230 is received through the communication circuit 310 in response to the fifth message, store a reception time and a transmission time of the sixth message in the memory 320, when a seventh message including a transmission time and transmitted by the third external electronic device 240 is received through the communication circuit 310 in response to the fifth message, store a reception time and a transmission time of the seventh message in the memory 320, and when an eighth message including a transmission time and transmitted by the fourth external electronic device 250 is received from through the communication circuit 310 in response to the fifth message, store a reception time and a transmission time of the eighth message in the memory 320, wherein the seventh response time may be a difference between a reception time of the second message which is received by the first external electronic device 220 from the second external electronic device 230 and a transmission time of the fifth message transmitted by the first external electronic device 220, the eighth response time may be a difference between a reception time of the third message which is received by the first external electronic device 220 from the third external electronic device 240 and a transmission time of the fifth message transmitted by the first external electronic device 220, and the ninth response time may be a difference between a reception time of the fourth message which is received by the first external electronic device 220 from the fourth external electronic device 250 and a transmission time of the fifth message transmitted by the first external electronic device 220.

In various embodiments, the sixth message may include a tenth response time which is calculated by the second external electronic device 230 with respect to a difference between a reception time of the third message which is received by the second external electronic device 230 from the third external electronic device 240 and a transmission time of the sixth message transmitted by the second external electronic device 230, an eleventh response time which is calculated by the second external electronic device 230 with respect to a difference between a reception time of the fourth message which is received by the second external electronic device 230 from the fourth external electronic device 250 and a transmission time of the sixth message transmitted by the second external electronic device 230, and a twelfth response time which is calculated by the second external electronic device 230 with respect to a difference between a reception time of the fifth message which is received by the second external electronic device 230 from the first external electronic device 220 and a transmission time of the sixth message transmitted by the second external electronic device 230.

In various embodiments, the seventh message may include a thirteenth response time which is calculated by the third external electronic device 240 with respect to a difference between a reception time of the fourth message which is received by the third external electronic device 240 from the fourth external electronic device 250 and a transmission time of the seventh message transmitted by the third external electronic device 240, an fourteenth response time which is calculated by the third external electronic device 240 with respect to a difference between a reception time of the fifth message which is received by the third external electronic device 240 from the first external electronic device 220 and a transmission time of the seventh message transmitted by the third external electronic device 240, and a fifteenth response time which is calculated by the third external electronic device 240 with respect to a difference between a reception time of the sixth message which is received by the third external electronic device 240 from the second external electronic device 230 and a transmission time of the seventh message transmitted by the third external electronic device 240.

In various embodiments, the eighth message may include a sixteenth response time which is calculated by the fourth external electronic device 250 with respect to a difference between a reception time of the fifth message which is received by the fourth external electronic device 250 from the first external electronic device 220 and a transmission time of the eighth message transmitted by the fourth external electronic device 250, a seventeenth response time which is calculated by the fourth external electronic device 250 with respect to a difference between a reception time of the sixth message which is received by the fourth external electronic device 250 from the second external electronic device 230 and a transmission time of the eighth message transmitted by the fourth external electronic device 250, and an eighteenth response time which is calculated by the fourth external electronic device 250 with respect to a difference between a reception time of the seventh message which is received by the fourth external electronic device 250 from the third external electronic device 240 and a transmission time of the eighth message transmitted by the fourth external electronic device 250.

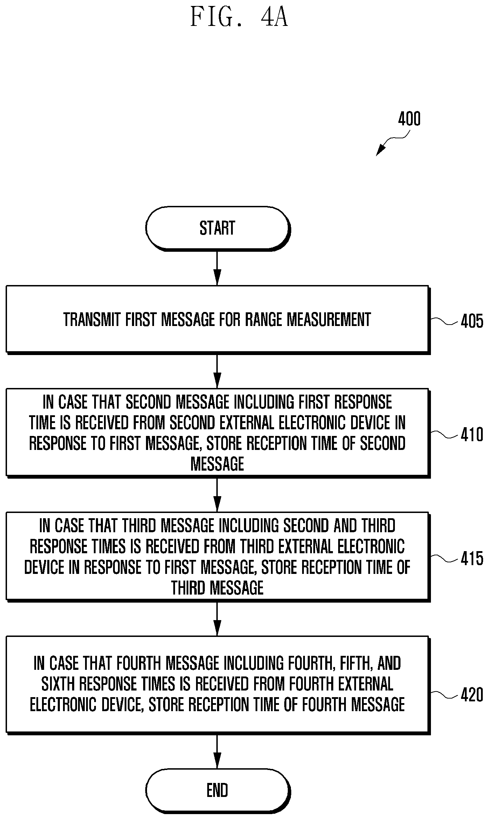

FIG. 4A is a flowchart illustrating an operation of a first external electronic device according to an embodiment of the disclosure.

FIG. 4A according to various embodiments is a diagram illustrating an operation of message transmission/reception between the electronic device 210 and external electronic devices (e.g., the first external electronic device 220, the second external electronic device 230, the third external electronic device 240, and/or the fourth external electronic device 250).

In various embodiments, the first external electronic device 220 may function as an initiator and may be a device configured to start positioning by transmitting a first message (e.g., a poll message).

In various embodiments, the first external electronic device 220 may activate (or turn on) a communication circuit, for example, a UWB module during a range measurement period (e.g., a ranging round). By activating (or turning on) the UWB module, a message (e.g., a response message) may be received from the first external electronic device 220, the second external electronic device 230, the third external electronic device 240, and the fourth external electronic device 250.

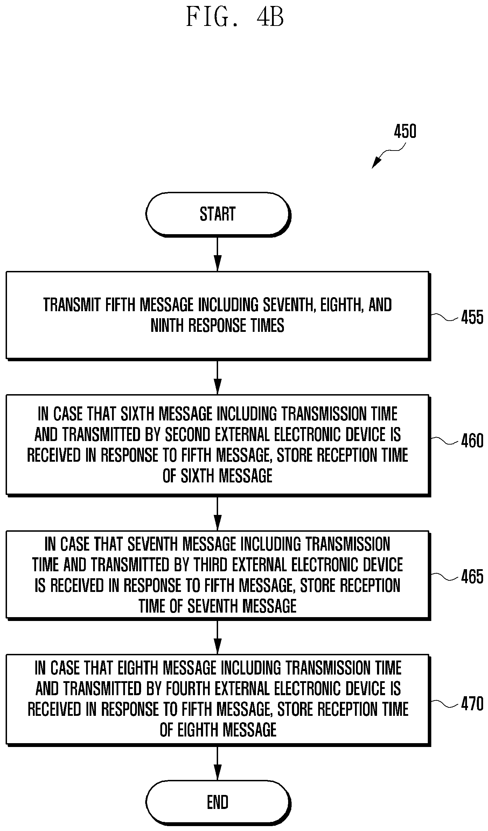

In various embodiments, operation 405 to operation 420 to be described below and operation 455 to operation 470 in FIG. 4B may be performed within a first range measurement period (e.g., a first ranging round).

Referring to FIG. 4A, in a method 400, the first external electronic device 220 may transmit a first message for range measurement in operation 405. For example, the first message may include a poll message.

In various embodiments, a format of the first message (e.g., a poll message) may be as shown in Table 1 below.

Table 1

| Message Control | Round Index | Block Index | TX Timestamp | Responder DT-Anchor Management List | Inter-Cluster Synchronization | Anchor Location | Active Ranging Round Information |
|---|---|---|---|---|---|---|---|
|  |  |  |  |  |  |  |  |

In an embodiment, when a second message including a first response time is received from the second external electronic device 230 in response to the first message, the first external electronic device 220 may store a reception time of the second message in operation 410. For example, the first response time may correspond to a difference, which is calculated by the second external electronic device 230, between a reception time when the second external electronic device 230 receives the first message transmitted by the first external electronic device 220 and a transmission time of the second message (e.g., a response message) to be transmitted by the second external electronic device 230 in response to the first message.

In another embodiment, when a third message including second and third response times is received from the third external electronic device 240 in response to the first message, the first external electronic device 220 may store a reception time of the third message in operation 415. For example, the second response time may be a difference, which is calculated by the third external electronic device 240, between a reception time when the third external electronic device 240 receives the first message transmitted from the first external electronic device 220 and a transmission time of the third message (e.g., a response message) to be transmitted by the third external electronic device 240 in response to the first message. The third response time may be a difference, which is calculated by the third external electronic device 240, between a reception time when the third external electronic device 240 receives the second message transmitted from the second external electronic device 230 and a transmission time of the third message (e.g., a response message) to be transmitted by the third external electronic device 240 in response to the first message.

In another embodiment, when a fourth message including fourth, fifth, and sixth response times is received from the fourth external electronic device 250 in response to the first message, the first external electronic device 220 may store a reception time of the fourth message in operation 420. For example, the fourth response time may be a difference, which is calculated by the fourth external electronic device 250, between a reception time when the fourth external electronic device 250 receives the first message transmitted by the first external electronic device 220 and a transmission time of the fourth message (e.g., a response message) to be transmitted by the fourth external electronic device 250 in response to the first message. The fifth response time may be a difference, which is calculated by the fourth external electronic device 250, between a reception time when the fourth external electronic device 250 receives the second message transmitted by the second external electronic device 230 and a transmission time of the fourth message (e.g., a response message) to be transmitted by the fourth external electronic device 250 in response to the first message. The sixth response time may be a difference, which is calculated by the fourth external electronic device 250, between a reception time when the fourth external electronic device 250 receives the third message transmitted by the third external electronic device 240 and a transmission time of the fourth message (e.g., a response message) to be transmitted by the fourth external electronic device 250 in response to the first message.

In various embodiments, a format of the second message, the third message, and the fourth message (e.g., a response message) may be as shown in Table 2 below.

Table 2

| Message Control | Round Index | Block Index | TX Timestamp | CFO | Responder Reply Time | Responder ToF Result | Anchor Location | Active Ranging Round Information |
|---|---|---|---|---|---|---|---|---|

In various embodiments, a first response time included in the second message transmitted by the second external electronic device 230 may be included in a "Responder Reply Time" parameter of the second message according to Table 2 above and transmitted. In another embodiment, a second response time and a third response time included in the third message transmitted by the third external electronic device 240 may be included in a "Responder Reply Time" parameter of the second message according to Table 2 above to be transmitted. In still another embodiment, a fourth response time, a fifth response time, and a sixth response time included in the fourth message transmitted by the fourth external electronic device 250 may be included in a "Responder Reply Time" parameter of the second message according to Table 2 above to be transmitted.

The order of operation 410, operation 415, and operation 420 shown in FIG. 4A according to various embodiments is merely an embodiment and is not limited thereto.

FIG. 4B is a flowchart illustrating an operation of a first external electronic device 220 according to an embodiment of the disclosure.

FIG. 4B according to various embodiments may be additional operations of FIG. 4A described above. For example, in case that operation 455 or operation 455 to operation 470 of FIG. 4B are performed in addition to FIG. 4A, a DS-TWR manner may be used.

Referring to FIG. 4B, in a method 450, the first external electronic device 220 may transmit a fifth message including seventh, eighth, and ninth response times in operation 455. The fifth message may be a final message.

In various embodiments, a format of the fifth message (e.g., a final message) may be as shown in Table 3 below.

Table 3

| Message Control | Round Index | Block Index | TX Timestamp | Reply Time List |
|---|---|---|---|---|

In an embodiment, the first external electronic device 220 may transmit the fifth message (e.g., a final message). For example, the seventh response time may correspond to a difference, which is calculated by the first external electronic device 220, between a reception time of a second message which is received by the first external electronic device 220 from the second external electronic device 230 and a transmission time of the fifth message transmitted by the first external electronic device 220. The eighth response time may correspond to a difference, which is calculated by the first external electronic device 220, between a reception time of a third message which is received by the first external electronic device from the third external electronic device 240 and a transmission time of the fifth message transmitted by the first external electronic device 220. The ninth response time may correspond to a difference, which is calculated by the first external electronic device 220, between a reception time of a fourth message which is received by the first external electronic device 220 from the fourth external electronic device 250 and a transmission time of the fifth message transmitted by the first external electronic device 220.

In another embodiment, the first external electronic device 220 may transmit the fifth message (e.g., a final message). For example, the seventh response time may correspond to a difference, which is calculated by the first external electronic device 220, between a reception time of a second message which is received by the first external electronic device 220 from the second external electronic device 230 and a transmission time of the fifth message transmitted by the first external electronic device 220. The eighth response time may correspond to a difference, which is calculated by the first external electronic device 220, between a reception time of a third message which is received by the first external electronic device from the third external electronic device 240 and a transmission time of the fifth message transmitted by the first external electronic device 220. The ninth response time may correspond to a difference, which is calculated by the first external electronic device 220, between a reception time of a fourth message which is received by the first external electronic device 220 from the fourth external electronic device 250 and a transmission time of the fifth message transmitted by the first external electronic device 220.

In various embodiments, the seventh response time, the eighth response time, and the ninth response time included in the fifth message transmitted by the first external electronic device 220 may be included in a "Reply Time List" parameter of the fifth message according to Table 3 above and transmitted.

In another embodiment, when a sixth message including a transmission time and transmitted by the second external electronic device 230 is received in response to the fifth message, the first external electronic device 220 may store a reception time of the sixth message in operation 460. The transmission time of the sixth message may be added to a "TX Timestamp" of the sixth message according to Table 2 above and received. However, without limitation thereto, the sixth message may include a tenth response time which is calculated by the second external electronic device 230 with respect to a difference between a reception time of the third message which is received by the second external electronic device 230 from the third external electronic device 240 and a transmission time of the sixth message transmitted by the second external electronic device 230, an eleventh response time which is calculated by the second external electronic device 230 with respect to a difference between a reception time of the fourth message which is received by the second external electronic device 230 from the fourth external electronic device 250 and a transmission time of the sixth message transmitted by the second external electronic device 230, and a twelfth response time which is calculated by the second external electronic device 230 with respect to a difference between a reception time of the fifth message which is received by the second external electronic device 230 from the first external electronic device 220 and a transmission time of the sixth message transmitted by the second external electronic device 230.

In another embodiment, when a seventh message including a transmission time and transmitted by the third external electronic device 240 is received in response to the fifth message, the first external electronic device 220 may store a reception time of the seventh message in operation 465. The transmission time of the seventh message may be added to a "TX Timestamp" of the seventh message according to Table 2 above and received. However, without limitation thereto, the seventh message may include a thirteenth response time which is calculated by the third external electronic device 240 with respect to a difference between a reception time of the fourth message which is received by the third external electronic device 240 from the fourth external electronic device 250 and a transmission time of the seventh message transmitted by the third external electronic device 240, an fourteenth response time which is calculated by the third external electronic device 240 with respect to a difference between a reception time of the fifth message which is received by the third external electronic device 240 from the first external electronic device 220 and a transmission time of the seventh message transmitted by the third external electronic device 240, and a fifteenth response time which is calculated by the third external electronic device 240 with respect to a difference between a reception time of the sixth message which is received by the third external electronic device 240 from the second external electronic device 230 and a transmission time of the seventh message transmitted by the third external electronic device 240.

In another embodiment, when an eighth message including a transmission time and transmitted by the fourth external electronic device 250 is received in response to the fifth message, the first external electronic device 220 may store a reception time of the eighth message in operation 470. The transmission time of the eighth message may be added to a "TX Timestamp" of the eighth message according to Table 2 above and received. However, without limitation thereto, the eighth message may include a sixteenth response time which is calculated by the fourth external electronic device 250 with respect to a difference between a reception time of the fifth message which is received by the fourth external electronic device 250 from the first external electronic device 220 and a transmission time of the eighth message transmitted by the fourth external electronic device 250, a seventeenth response time which is calculated by the fourth external electronic device 250 with respect to a difference between a reception time of the sixth message which is received by the fourth external electronic device 250 from the second external electronic device 230 and a transmission time of the eighth message transmitted by the fourth external electronic device 250, and an eighteenth response time which is calculated by the fourth external electronic device 250 with respect to a difference between a reception time of the seventh message which is received by the fourth external electronic device 250 from the third external electronic device 240 and a transmission time of the eighth message transmitted by the fourth external electronic device 250.

In various embodiments, operation 455 in which the first external electronic device 220 transmits the fifth message (e.g., a final message) in FIG. 4B may be omitted. Each of the second external electronic device 230, the third external electronic device 240, and the fourth external electronic device 250 may transmit a sixth message, a seventh message, and an eighth message (e.g., the sixth message, the seventh message, and the eighth message excluding response times) including only transmission times.

A method for measuring a position of an electronic device (e.g., the first external electronic device 220) according to various embodiments may include an operation of transmitting a first message for range measurement in a first range measurement period through the communication circuit (e.g., the communication circuit 310 in FIG. 3), an operation of receiving a second message including a first response time and transmitted by a first external electronic device (e.g., the second external electronic device 230) through the communication circuit 310 in response to the first message, an operation of receiving a third message including a second response time and a third response time and transmitted by a second external electronic device (e.g., the third external electronic device 240) through the communication circuit 310 in response to the first message, and an operation of receiving a fourth message including a fourth response time, a fifth response time, and a sixth response time and transmitted by a third external electronic device (e.g., the fourth external electronic device 250) through the communication circuit 310 in response to the first message, wherein the first response time may be a difference between a reception time when the first external electronic device (e.g., the second external electronic device 230) receives the first message and a transmission time of the second message, the second response time may be a difference between a reception time when the second external electronic device (e.g., the third external electronic device 240) receives the first message and a transmission time of the third message, the third response time may be difference between a reception time when the second external electronic device (e.g., the third external electronic device 240) receives the second message and a transmission time of the third message, the fourth response time may be a difference between a reception time when the third external electronic device (e.g., the fourth external electronic device 250) receives the first message and a transmission time of the fourth message, the fifth response time may be a difference between a reception time when the third external electronic device (e.g., the fourth external electronic device 250) receives the second message and a transmission time of the fourth message, and the sixth response time may be a difference between a reception time when the third external electronic device (e.g., the fourth external electronic device 250) receives the third message and a transmission time of the fourth message.

The method for measuring a position of an electronic device (e.g., the first external electronic device 220) according to various embodiments may include an operation of transmitting a fifth message including a seventh response time, an eighth response time, and a ninth response time through the communication circuit 310, when a sixth message including a transmission time and transmitted by the first external electronic device (e.g., the second external electronic device 230) is received through the communication circuit 310 in response to the fifth message, an operation of storing a reception time of the sixth message in the memory (e.g., the memory 320 in FIG. 3), when a seventh message including a reception time and transmitted by the second external electronic device (e.g., the third external electronic device 240) is received through the communication circuit 310 in response to the fifth message, an operation of storing a reception time of the seventh message in the memory 320, and when an eighth message including a transmission time and transmitted by the third external electronic device (e.g., the fourth external electronic device 250) is received through the communication circuit 310 in response to the fifth message, an operation of storing a reception time of the eighth message in the memory 320.

In various embodiments, the seventh response time may be a difference between a reception time of the second message received from the first external electronic device (e.g., the second external electronic device 230) and a transmission time of the fifth message, the eighth response time may be a difference between a reception time of the third message received from the second external electronic device (e.g., the third external electronic device 240) and a transmission time of the fifth message, and the ninth response time may be a difference between a reception time of the fourth message received from the third external electronic device (e.g., the fourth external electronic device 250) and a transmission time of the fifth message.

In various embodiments, the sixth message may include a tenth response time which is calculated by the first external electronic device (e.g., the second external electronic device 230) with respect to a difference between a reception time of the third message which is received by the first external electronic device (e.g., the second external electronic device 230) from the second external electronic device (e.g., the third external electronic device 240) and a transmission time of the sixth message transmitted by the first external electronic device (e.g., the second external electronic device 230), an eleventh response time which is calculated by the first external electronic device (e.g., the second external electronic device 230) with respect to a difference between a reception time of the fourth message which is received by the first external electronic device (e.g., the second external electronic device 230) from the third external electronic device (e.g., the fourth external electronic device 250) and a transmission time of the sixth message transmitted by the first external electronic device (e.g., the second external electronic device 230), and a twelfth response time which is calculated by the first external electronic device (e.g., the second external electronic device 230) with respect to a difference between a reception time of the fifth message which is received by the first external electronic device (e.g., the second external electronic device 230) from the electronic device (e.g., the first external electronic device 220) and a transmission time of the sixth message transmitted by the first external electronic device (e.g., the second external electronic device 230).

In various embodiments, the seventh message may include a thirteenth response time which is calculated by the second external electronic device (e.g., the third external electronic device 240) with respect to a difference between a reception time of the fourth message which is received by the second external electronic device (e.g., the third external electronic device 240) from the third external electronic device (e.g., the fourth external electronic device 250) and a transmission time of the seventh message transmitted by the second external electronic device (e.g., the third external electronic device 240), a fourteenth response time which is calculated by the second external electronic device (e.g., the third external electronic device 240) with respect to a difference between a reception time of the fifth message which is received by the second external electronic device (e.g., the third external electronic device 240) from the electronic device (e.g., the first external electronic device 220) and a transmission time of the seventh message transmitted by the second external electronic device (e.g., the third external electronic device 240), and a fifteenth response time which is calculated by the second external electronic device (e.g., the third external electronic device 240) with respect to a difference between a reception time of the sixth message which is received by the second external electronic device (e.g., the third external electronic device 240) from the first external electronic device (e.g., the second external electronic device 230) and a transmission time of the seventh message transmitted by the second external electronic device (e.g., the third external electronic device 240).

In various embodiments, the eighth message may include a sixteenth response time which is calculated by the third external electronic device (e.g., the fourth external electronic device 250) with respect to a difference between a reception time of the fifth message which is received by the third external electronic device (e.g., the fourth external electronic device 250) from the electronic device (e.g., the first external electronic device 220) and a transmission time of the eighth message transmitted by the third external electronic device (e.g., the fourth external electronic device 250), a seventeenth response time which is calculated by the third external electronic device (e.g., the fourth external electronic device 250) with respect to a difference between a reception time of the sixth message which is received by the third external electronic device (e.g., the fourth external electronic device 250) from the first external electronic device (e.g., the second external electronic device 230) and a transmission time of the eighth message transmitted by the third external electronic device (e.g., the fourth external electronic device 250), and an eighteenth response time which is calculated by the third external electronic device (e.g., the fourth external electronic device 250) with respect to a difference between a reception time of the seventh message which is received by the third external electronic device (e.g., the fourth external electronic device 250) from the second external electronic device (e.g., the third external electronic device 240) and a transmission time of the eighth message transmitted by the third external electronic device (e.g., the fourth external electronic device 250).

The method for measuring a position of an electronic device (e.g., the first external electronic device 220) according to various embodiments may further include an operation of storing a reception time of the second message, a reception time of the third message, and a reception time of the fourth message in the memory 320.

The method for measuring a position of an electronic device (e.g., the first external electronic device 220) according to various embodiments may further include, when the fifth message including a transmission time and transmitted by the first external electronic device (e.g., the second external electronic device 230) is received through the communication circuit 310, an operation of storing a reception time of the fifth message, when the sixth message including a reception time and transmitted by the second external electronic device (e.g., the third external electronic device 240) is received through the communication circuit 310, an operation of storing a reception time of the sixth message, and when the seventh message including a transmission time and transmitted by the third external electronic device (e.g., the fourth external electronic device 250) is received through the communication circuit 310, an operation of storing a reception time of the seventh message.

The order of operation 460, operation 465, and operation 470 shown in FIG. 4B according to various embodiments is merely an embodiment and is not limited thereto.

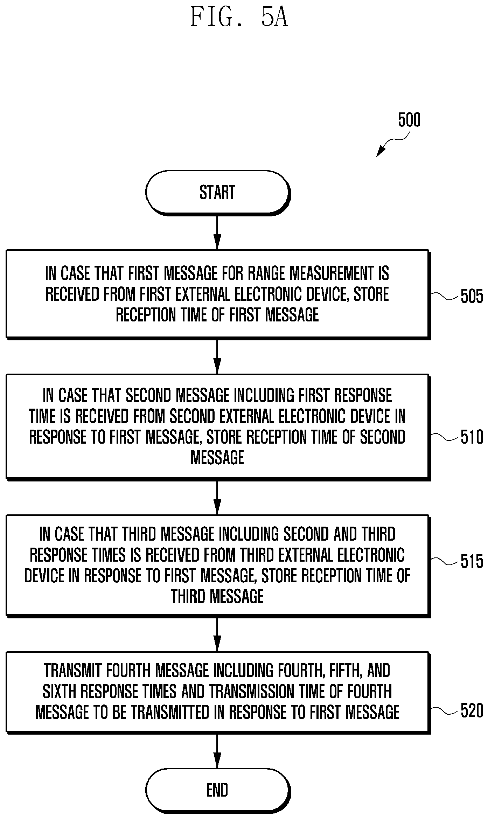

FIG. 5A is a flowchart illustrating an operation of an external electronic device according to an embodiment of the disclosure.

In various embodiments, the external electronic device performing an operation of FIG. 5A may be the second external electronic device 230, the third external electronic device 240, or the fourth external electronic device 250. In an embodiment, the second external electronic device 230, the third external electronic device 240, or the fourth external electronic device 250 may function as a responder and may be a device configured to transmit a second message (e.g., a response message) in response to a first message (e.g., a poll message) received from the first external electronic device (e.g., an initiator).

An operation in FIG. 5A to be described below according to various embodiments will be described on the assumption that the operation is performed by the fourth external electronic device 250 among the second external electronic device 230, the third external electronic device 240, or the fourth external electronic device 250 described above.

Referring to FIG. 5A, in a method 500, when the first message for range measurement is received from the first external electronic device 220, the fourth external electronic device 250 may store a reception time of the first message in operation 505. For example, the first external electronic device 220 may transmit (e.g., broadcast) the first message for range measurement in a range measurement period (e.g., a ranging round). In an embodiment, when a second message (e.g., a response message) including a first response time is received from the second external electronic device 230 in response to the first message, the fourth external electronic device 250 may store a reception time of the second message in operation 510. For example, the second message may be transmitted by the second external electronic device 230 in a broadcasting manner or a unicasting manner. In another embodiment, the first response time included in the second message may correspond to a difference, which is calculated by the second external electronic device 230, between a reception time when the second external electronic device 230 receives the first message transmitted by the first external electronic device 220 and a transmission time of the second message (e.g., a response message) to be transmitted by the second external electronic device 230 in response to the first message. The second message may further include at least one of address information of itself (e.g., the second external electronic device 230) or a transmission time of the second message. However, without limitation thereto, when a response time is received by the second external electronic device 230 from other external electronic device (e.g., at least one of the first external electronic device 220, the third external electronic device 240, or the fourth external electronic device 250), the second message may further include the response time received from the other external electronic device.

In another embodiment, when a third message including second and third response times is received from the third external electronic device 240 in response to the first message, the fourth external electronic device 250 may store a reception time of the third message in operation 515. For example, the third message may be transmitted by the third external electronic device 240 in a broadcasting manner or a unicasting manner. In another embodiment, the second response time included in the third message may correspond to a difference, which is calculated by the third external electronic device 240, between a reception time when the third external electronic device 240 receives the first message transmitted by the first external electronic device 220 and a transmission time of the third message (e.g., a response message) to be transmitted by the third external electronic device 240 in response to the first message. The third response time included in the third message may correspond to a difference, which is calculated by the third external electronic device 240, between a reception time when the third external electronic device 240 receives the second message transmitted by the second external electronic device 230 and a transmission time of the third message (e.g., a response message) to be transmitted by the third external electronic device 240 in response to the first message. The third message may further include at least one of address information of itself (e.g., the third external electronic device 240) or a transmission time of the third message. However, without limitation thereto, when a response time is received by the third external electronic device 240 from other external electronic device (e.g., at least one of the first external electronic device 220, the second external electronic device 230, or the fourth external electronic device 250), the third message may further include the response time received from the other external electronic device.

In another embodiment, the fourth external electronic device 250 may transmit, a fourth message including fourth, fifth, and sixth response times and a transmission time of the fourth message to be transmitted in response to the first message in operation 520. For example, the fourth external electronic device 250 may transmit the fourth message in a broadcasting manner or a unicasting manner. In another embodiment, the fourth response time included in the fourth message may correspond to a difference, which is calculated by the fourth external electronic device 250, between a reception time when the fourth external electronic device 250 receives the first message transmitted by the first external electronic device 220 and a transmission time of the fourth message (e.g., a response message) to be transmitted by the fourth external electronic device 250 in response to the first message. The fifth response time included in the fourth message may correspond to a difference, which is calculated by the fourth external electronic device 250, between a reception time when the fourth external electronic device 250 receives the second message received from the second external electronic device 230 and a transmission time of the fourth message (e.g., a response message) to be transmitted by the fourth external electronic device 250 in response to the first message. The sixth response time included in the fourth message may correspond to a difference, which is calculated by the fourth external electronic device 250, between a reception time when the fourth external electronic device 250 receives the third message received from the third external electronic device 240 and a transmission time of the fourth message (e.g., a response message) to be transmitted by the fourth external electronic device 250 in response to the first message. The fourth message may further include at least one of address information of itself (e.g., the fourth external electronic device 250) or a transmission time of the fourth message. However, without limitation thereto, when a response time is received by the fourth external electronic device 250 from other external electronic device (e.g., at least one of the first external electronic device 220, the second external electronic device 230, or the third external electronic device 240), the fourth message may further include the response time received from the other external electronic device.

In various embodiments, the second external electronic device 230, the third external electronic device 240, and the fourth external electronic device 250 may activate (or turn on) a communication circuit, for example, a UWB module during a range measurement period (e.g., a ranging round). By activating (or turning on) the UWB module, each of the second external electronic device 230, the third external electronic device 240, and the fourth external electronic device 250 may receive a message (e.g., a poll message and a response message) transmitted/received among the first external electronic device 220, the second external electronic device 230, the third external electronic device 240, and the fourth external electronic device 250.

Referring to FIG. 5A according to various embodiments, it has been described that after the fourth external electronic device 250 receives the second message transmitted from the second external electronic device 230, the third message transmitted from the third external electronic device 240 is received, but is not limited thereto. For example, the fourth external electronic device 250 may receive the third message transmitted by the third external electronic device 240 and then receive the second messaged transmitted by the second external electronic device 230.

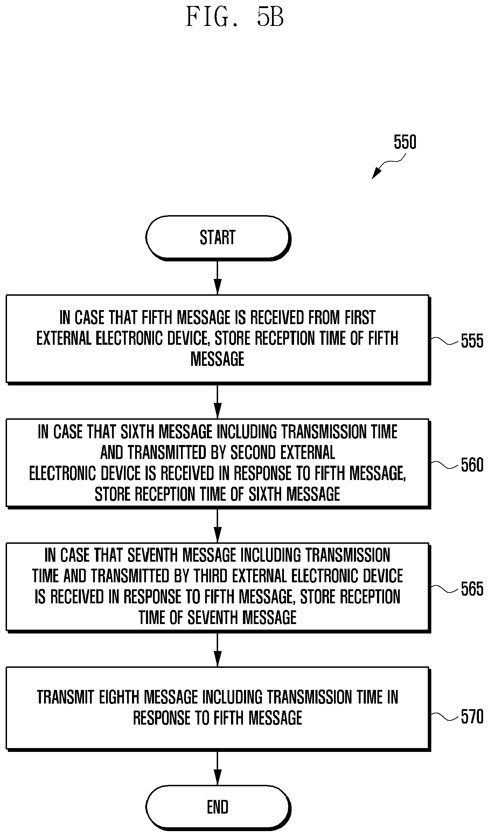

FIG. 5B is a flowchart illustrating an operation of an external electronic device according to an embodiment of the disclosure.

FIG. 5B according to various embodiments may be additional operations of FIG. 5A described above.

Referring to FIG. 5B, in a method 550, when the fifth message including a response time and transmitted from the first external electronic device 220 is received, the fourth external electronic device 250 may store a reception time of the fifth message in operation 555. The fifth message may be a final message.

In various embodiments, it has been described that the fifth message includes the transmission time of the fifth message but is not limited thereto, and the fifth message may include a seventh response time calculated based on a time when the first external electronic device 220 receives the second message transmitted from the second external electronic device 230 and a transmission time of the fifth message transmitted by the first external electronic device 220, an eighth response time calculated based on a time when the first external electronic device 220 receives the third message transmitted from the third external electronic device 240 and a transmission time of the fifth message transmitted by the first external electronic device 220, and a ninth response time calculated based on a time when the first external electronic device 220 receives the fourth message transmitted from the fourth external electronic device 250 and a transmission time of the fifth message transmitted by the first external electronic device 220.

In an embodiment, when a sixth message (e.g., a response message) including a transmission time and transmitted by the second external electronic device 230 is received in response to the fifth message, the fourth external electronic device 250 may store a reception time of the sixth message in operation 560. For example, the sixth message may be transmitted by the second external electronic device 230 in a broadcasting manner or a unicasting manner.

In various embodiments, it has been described that the sixth message includes the transmission time of the sixth message but is not limited thereto, and the sixth message may include a tenth response time calculated based on a time when the first external electronic device 220 receives the third message transmitted from the third external electronic device 240 and a transmission time of the sixth message transmitted by the second external electronic device 230, an eleventh response time calculated based on a time when the second external electronic device 230 receives the fourth message transmitted from the fourth external electronic device 250 and a transmission time of the sixth message transmitted by the second external electronic device 230, and a twelfth response time calculated based on a time when the second external electronic device 230 receives the fifth message transmitted from the first external electronic device 220 and a transmission time of the sixth message transmitted by the second external electronic device 230.

In another embodiment, when a seventh message (e.g., a response message) including a transmission time and transmitted by the third external electronic device 240 is received in response to the fifth message, the fourth external electronic device 250 may store a reception time of the seventh message in operation 565. For example, the seventh message may be transmitted by the third external electronic device 240 in a broadcasting manner or a unicasting manner.

In various embodiments, it has been described that the seventh message includes the transmission time of the seventh message but is not limited thereto, and the seventh message may include a thirteenth response time calculated based on a time when the third external electronic device 240 receives the fourth message transmitted from the fourth external electronic device 250 and a transmission time of the seventh message transmitted by the third external electronic device 240, a fourteenth response time calculated based on a time when the third external electronic device 240 receives the fifth message transmitted from the first external electronic device 220 and a transmission time of the seventh message transmitted by the third external electronic device 240, and a fifteenth response time calculated based on a time when the third external electronic device 240 receives the sixth message transmitted from the second external electronic device 230 and a transmission time of the seventh message transmitted by the third external electronic device 240.

In another embodiment, the fourth external electronic device 250 may transmit the eighth message (e.g., a response message) including a transmission time, in response to the fifth message in operation 570. For example, the fourth external electronic device 250 may transmit the eighth message in a broadcasting manner or a unicasting manner.

In various embodiments, it has been described that the eighth message includes the transmission time of the eighth message but is not limited thereto, and the eighth message may include a sixteenth response time calculated based on a time when the fourth external electronic device 250 receives the fifth message transmitted from the first external electronic device 220 and a transmission time of the eighth message transmitted by the fourth external electronic device 250, a seventeenth response time calculated based on a time when the fourth external electronic device 250 receives the sixth message transmitted from the second external electronic device 230 and a transmission time of the eighth message transmitted by the fourth external electronic device 250, and an eighteenth response time calculated based on a time when the fourth external electronic device 250 receives the seventh message transmitted from the third external electronic device 240 and a transmission time of the eighth message transmitted by the fourth external electronic device 250.

In various embodiments, the operation (e.g., operation 455 in FIG. 4B) of transmitting the fifth message (e.g., a final message) by the first external electronic device 220 may be omitted and accordingly, operation 555 of receiving the fifth message from the first external electronic device 220 may be omitted. The fourth external electronic device 250 may receive the fifth message, the sixth message, and the seventh message including only transmission times and excluding response times from each of the first external electronic device 220, the second external electronic device 230, and the third external electronic device 240.

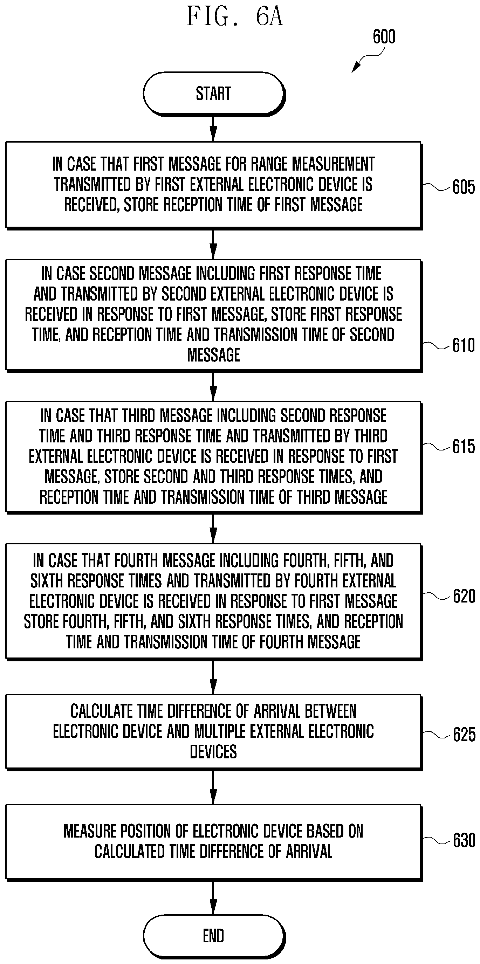

FIG. 6A is a flowchart illustrating an operation of an electronic device 210 according to an embodiment of the disclosure.

In various embodiments, the electronic device 210 may be a device configured to receive messages transmitted or received among at least one of the first external electronic device 220, the second external electronic device 230, the third external electronic device 240, or the fourth external electronic device 250 so as to measure a position of the electronic device 210.

In various embodiments, the electronic device 210 may activate (or turn on) a communication circuit, for example, a UWB module during a range measurement period (e.g., a ranging round). By activating (or turning on) the UWB module, the electronic device 210 may receive a message (e.g., a poll message and a response message) transmitted or received among the first external electronic device 220, the second external electronic device 230, the third external electronic device 240, and the fourth external electronic device 250.

FIG. 6A according to various embodiments is a diagram illustrating a method for measuring a position in an SS-TWR manner.

Referring to FIG. 6A, in a method 600, when a first message (e.g., a poll message) for range measurement transmitted by the first external electronic device 220 is received, the electronic device 210 may store a reception time of the first message in operation 605.

In an embodiment, when a second message including a first response time and transmitted by the second external electronic device 230 is received in response to the first message, the electronic device 210 may store the first response time, and reception time and transmission time of the second message in operation 610. The first response time may correspond to a time calculated by the second external electronic device 230 based on a time when the second external electronic device 230 receives the first message transmitted by the first external electronic device 220 and a transmission time of the second message (e.g., a response message) to be transmitted by the second external electronic device 230 in response to the first message.

In another embodiment, when a third message including a second response time and a third response time and transmitted by the third external electronic device 240 is received in response to the first message, the electronic device 210 may store the second and third response times, and a reception time and a transmission time of the third message in operation 615. The second response time may correspond to a time calculated by the third external electronic device 240 based on a time when the third external electronic device 240 receives the first message transmitted by the first external electronic device 220 and a transmission time of the third message (e.g., a response message) to be transmitted by the third external electronic device 240 in response to the first message. The third response time included in the third message may correspond to a time calculated by the third external electronic device 240 based on a time when the third external electronic device 240 receives the second message transmitted by the second external electronic device 230 and a transmission time of the third message (e.g., a response message) to be transmitted by the third external electronic device 240 in response to the first message.

In another embodiment, when a fourth message including fourth, fifth, and sixth response times and transmitted by the fourth external electronic device 250 is received in response to the first message, the electronic device 210 may store the fourth, fifth, and sixth response times, and a reception time and a transmission time of the fourth message in operation 620. The fourth response time may correspond to a time calculated by the fourth external electronic device 250 based on a reception time when the fourth external electronic device 250 receives the first message transmitted by the first external electronic device 220 and a transmission time of the fourth message (e.g., a response message) to be transmitted by the fourth external electronic device 250 in response to the first message. The fifth response time included in the fourth message may correspond to a time calculated by the fourth external electronic device 250 based on a time when the fourth external electronic device 250 receives the third message transmitted by the third external electronic device 240 and a transmission time of the fourth message (e.g., a response message) to be transmitted by the fourth external electronic device 250 in response to the first message. The sixth response time included in the fourth message may correspond to a time calculated by the fourth external electronic device 250 based on a time when the fourth external electronic device 250 receives the second message transmitted by the third external electronic device 240 and a transmission time of the fourth message (e.g., a response message) to be transmitted by the fourth external electronic device 250 in response to the first message.

In another embodiment, the electronic device 210 may calculate a time difference of arrival between the electronic device 210 and multiple external electronic devices in operation 625. For example, a time difference of arrival among the electronic device 210, the first external electronic device 220, and the second external electronic device 230 may be calculated as a value obtained by dividing a difference between a distance between the electronic device 210 and the first external electronic device 220 and a distance between the electronic device 210 and the second external electronic device 230 by the speed of light (a constant) (e.g., c). For another example, a time difference of arrival among the electronic device 210, the second external electronic device 230, and the third external electronic device 240 may be calculated as a value obtained by dividing a difference between a distance between the electronic device 210 and the second external electronic device 230 and a distance between the electronic device 210 and the third external electronic device 240 by the speed of light (a constant) (e.g., c). For still another example, a time difference of arrival among the electronic device 210, the third external electronic device 240, and the fourth external electronic device 250 may be calculated as a value obtained by dividing a difference between a distance between the electronic device 210 and the third external electronic device 240 and a distance between the electronic device 210 and the fourth external electronic device 250 by the speed of light (a constant) (e.g., c).

In another embodiment, the electronic device 210 may measure a position of the electronic device 210 based on the calculated time difference of arrival in operation 630.

In a conventional art, a value is calculated by dividing a difference between a distance between the electronic device 210 and the first external electronic device 220 and a distance between the electronic device 210 and another external electronic device (e.g., the second external electronic device 230, the third external electronic device 240, or the fourth external electronic device 250) by the speed of light (a constant) (e.g., c), whereas, in various embodiments of the disclosure, a value may be calculated by dividing a difference between a distance between the electronic device 210 and another external electronic device (e.g., the second external electronic device 230) other than the first external electronic device 220 and a distance between the electronic device 210 and still another external electronic device (e.g., the third external electronic device 240) by the speed of light (a constant) (e.g., c), and thus positioning performance of the electronic device 210 may be improved.

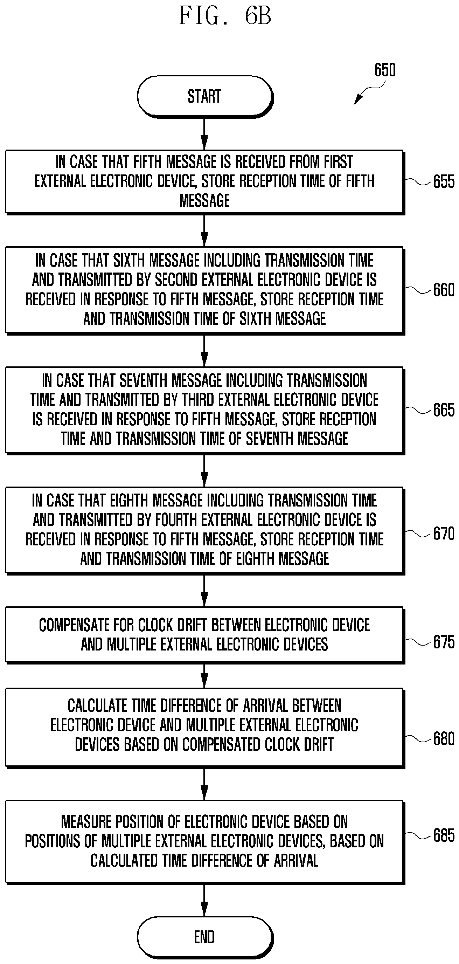

FIG. 6B is a flowchart illustrating an operation of an electronic device 210 according to an embodiment of the disclosure.

FIG. 6B according to various embodiments may be additional operations after operation 620 of FIG. 6A described above. For example, in case that operations in FIG. 6B are additionally performed after operation 620 in FIG. 6A, a DS-TWR manner may be used.

Referring to FIG. 6B, in a method, 650, in an embodiment, when a fifth message (e.g., a final message) is received from the first external electronic device 220, the electronic device 210 may store a reception time of the fifth message in operation 655. In various embodiments, the fifth message may include a seventh response time calculated with respect to a difference between a reception time of the second message which is received by the first external electronic device 220 from the second external electronic device 230 and a transmission time of the fifth message transmitted by the first external electronic device 220, an eighth response time with respect to a difference between a reception time of the third message which is received by the first external electronic device 220 from the third external electronic device 240 and a transmission time of the fifth message transmitted by the first external electronic device 220, and a ninth response time with respect to a difference between a reception time of the fourth message which is received by the first external electronic device 220 from the fourth external electronic device 250 and a transmission time of the fifth message transmitted by the first external electronic device 220. The electronic device 210 may store the seventh response time, the eighth response time, and the ninth response time included in the fifth message as well as the reception time of the fifth message.

In an embodiment, when a sixth message including a transmission time and transmitted by the second external electronic device 230 is received in response to the fifth message, the electronic device 210 may store a reception time and a transmission time of the sixth message in operation 660. In various embodiments, the sixth message may include a tenth response time with respect to a difference between a reception time of the third message which is received by the second external electronic device 230 from the third external electronic device 240 and a transmission time of the sixth message transmitted by the second external electronic device 230, an eleventh response time with respect to a difference between a reception time of the fourth message which is received by the second external electronic device 230 from the fourth external electronic device 250 and a transmission time of the sixth message transmitted by the second external electronic device 230, and a twelfth response time with respect to a difference between a reception time of the fifth message which is received by the second external electronic device 230 from the first external electronic device 220 and a transmission time of the sixth message transmitted by the second external electronic device 230. The electronic device 210 may store the tenth response time, the eleventh response time, and the twelfth response time included in the sixth message as well as the reception time and the transmission time of the sixth message.

In another embodiment, when a seventh message including a transmission time and transmitted by the third external electronic device 240 is received in response to the fifth message, the electronic device 210 may store a reception time and a transmission time of the seventh message in operation 665. In various embodiments, the seventh message may include a thirteenth response time with respect to a difference between a reception time of the fourth message which is received by the third external electronic device 240 from the fourth external electronic device 250 and a transmission time of the seventh message transmitted by the third external electronic device 240, a fourteenth response time with respect to a difference between a reception time of the fifth message which is received by the third external electronic device 240 from the first external electronic device 220 and a transmission time of the seventh message transmitted by the third external electronic device 240, and a fifteenth response time with respect to a difference between a reception time of the sixth message which is received by the third external electronic device 240 from the second external electronic device 230 and a transmission time of the seventh message transmitted by the third external electronic device 240. The electronic device 210 may store the thirteenth response time, the fourteenth response time, and the fifteenth response time included in the seventh message as well as the reception time and the transmission time of the seventh message.

In another embodiment, when an eighth message including a transmission time and transmitted by the fourth external electronic device 250 is received in response to the fifth message, the electronic device 210 may store a reception time and a transmission time of the eighth message in operation 670. In various embodiments, the eighth message may include a sixteenth response time with respect to a difference between a reception time of the fifth message which is received by the fourth external electronic device 250 from the first external electronic device 220 and a transmission time of the eighth message transmitted by the fourth external electronic device 250, a seventeenth response time with respect to a difference between a reception time of the sixth message which is received by the fourth external electronic device 250 from the second external electronic device 230 and a transmission time of the eighth message transmitted by the fourth external electronic device 250, and an eighteenth response time with respect to a difference between a reception time of the seventh message which is received by the fourth external electronic device 250 from the third external electronic device 240 and a transmission time of the eighth message transmitted by the fourth external electronic device 250. The electronic device 210 may store the sixteenth response time, the seventeenth response time, and the eighteenth response time included in the eighth message as well as the reception time and the transmission time of the eighth message.

In another embodiment, the electronic device 210 may compensate for a clock drift between the electronic device 210 and multiple external electronic devices in operation 675. For example, the electronic device 210 may compensate for a clock drift between the electronic device 210 and multiple external electronic devices based on the reception time and the transmission time of the messages which are stored in operation 605 to operation 620 in FIG. 6A described above and the reception time and the transmission time of the messages which are stored in operation 655 to operation 670. For example, the electronic device 210 may compensate for a clock drift between the electronic device 210 and the first external electronic device 220, the second external electronic device 230, and fourth external electronic device 250 based on two response messages received from each external electronic device, for example, the reception time of the first message and the reception time of the fifth message received from the first external electronic device 220, the reception time and the transmission time of the second message and the reception time and the transmission time of the sixth message received from the second external electronic device 230, the reception time and the transmission time of the third message and the reception time and the transmission time of the seventh message received from the third external electronic device 240, and the reception time and the transmission time of the fourth message and the reception time and the transmission time of the eighth message received from the fourth external electronic device 250.

In another embodiment, the electronic device 210 may calculate a time difference of arrival (TDoA) between the electronic device 210 and multiple external electronic devices based on the compensated clock drift in operation 680.

For example, the electronic device 210 may calculate a time difference of arrival between the electronic device 210 and multiple external electronic devices based on a second message received from each external electronic device. For example, the electronic device 210 may calculate a time difference of arrival (TDoA) between the electronic device 210 and multiple external electronic devices based on the seventh response time, the eighth response time, and the ninth response time included in the fifth message received from the first external electronic device 220, the tenth response time, the eleventh response time, and the twelfth response time included in the sixth message received from the second external electronic device 230, the thirteenth response time, the fourteenth response time, and the fifteenth response time included in the seventh message received from the third external electronic device 240, and the sixteenth response time, the seventeenth response time, and the eighteenth response time included in the eighth message received from the fourth external electronic device 250.

More specifically, the electronic device 210 may calculate a distance between the electronic device 210 and the first external electronic device 220 and a distance between the electronic device 210 and the second external electronic device 230 based on the seventh response time, the eighth response time, and the ninth response time included in the fifth message received from the first external electronic device 220, and the tenth response time, the eleventh response time, and the twelfth response time included in the sixth message received from the second external electronic device 230. The electronic device 210 may calculate a time difference of arrival among the electronic device 210, the first external electronic device 220, and the second external electronic device 230 from a value obtained by dividing a difference between the distance between the electronic device 210 and the first external electronic device 220 and the distance between the electronic device 210 and the second external electronic device 230 by the speed of light (a constant) (e.g., c). The electronic device 210 may calculate a distance between the electronic device 210 and the first external electronic device 220 and a distance between the electronic device 210 and the third external electronic device 240 based on the seventh response time, the eighth response time, and the ninth response time included in the fifth message received from the first external electronic device 220, and the thirteenth response time, the fourteenth response time, and the fifteenth response time included in the seventh message received from the third external electronic device 240. The electronic device 210 may calculate a time difference of arrival among the electronic device 210, the first external electronic device 220, and the third external electronic device 240 from a value obtained by dividing a difference between the distance between the electronic device 210 and the first external electronic device 220 and the distance between the electronic device 210 and the third external electronic device 240 by the speed of light (a constant) (e.g., c). The electronic device 210 may calculate a distance between the electronic device 210 and the first external electronic device 220 and a distance between the electronic device 210 and the fourth external electronic device 250 based on the seventh response time, the eighth response time, and the ninth response time included in the fifth message received from the first external electronic device 220, and the sixteenth response time, the seventeenth response time, and the eighteenth response time included in the eighth message received from the fourth external electronic device 250. The electronic device 210 may calculate a time difference of arrival among the electronic device 210, the first external electronic device 220, and the fourth external electronic device 250 from a value obtained by dividing a difference between the distance between the electronic device 210 and the first external electronic device 220 and the distance between the electronic device 210 and the fourth external electronic device 250 by the speed of light (a constant) (e.g., c).

In another embodiment, the electronic device 210 may calculate a distance between the electronic device 210 and the second external electronic device 230 and a distance between the electronic device 210 and the third external electronic device 240 based on the tenth response time, the eleventh response time, and the twelfth response time included in the sixth message received from the second external electronic device 230, and the thirteenth response time, the fourteenth response time, and the fifteenth response time included in the seventh message received from the third external electronic device 240. The electronic device 210 may calculate a time difference of arrival among the electronic device 210, the second external electronic device 230, and the third external electronic device 240 from a value obtained by dividing a difference between the distance between the electronic device 210 and the second external electronic device 230 and the distance between the electronic device 210 and the third external electronic device 240 by the speed of light (a constant) (e.g., c). The electronic device 210 may calculate a distance between the electronic device 210 and the second external electronic device 230 and a distance between the electronic device 210 and the fourth external electronic device 250 based on the tenth response time, the eleventh response time, and the twelfth response time included in the sixth message received from the second external electronic device 230, and the sixteenth response time, the seventeenth response time, and the eighteenth response time included in the eighth message received from the fourth external electronic device 250. The electronic device 210 may calculate a time difference of arrival among the electronic device 210, the second external electronic device 230, and the fourth external electronic device 250 from a value obtained by dividing a difference between the distance between the electronic device 210 and the second external electronic device 230 and the distance between the electronic device 210 and the fourth external electronic device 250 by the speed of light (a constant) (e.g., c).

In another embodiment, the electronic device 210 may calculate a distance between the electronic device 210 and the third external electronic device 240 and a distance between the electronic device 210 and the fourth external electronic device 250 based on the thirteenth response time, the fourteenth response time, and the fifteenth response time included in the seventh message received from the third external electronic device 240, and the sixteenth response time, the seventeenth response time, and the eighteenth response time included in the eighth message received from the fourth external electronic device 250. The electronic device 210 may calculate a time difference of arrival among the electronic device 210, the third external electronic device 240, and the fourth external electronic device 250 from a value obtained by dividing a difference between the distance between the electronic device 210 and the third external electronic device 240 and the distance between the electronic device 210 and the fourth external electronic device 250 by the speed of light (a constant) (e.g., c).

In another embodiment, the electronic device 210 may measure a position of the electronic device 210 based on positions of multiple external electronic devices, based on the calculated time difference of arrival in operation 685.

By calculating a time difference of arrival between the electronic device 210 and multiple electronic devices in a mesh network form, based on time information (e.g., first to sixth response times, a reception time when each external electronic device receives a message transmitted from other external electronic device, and/or a transmission time when each external electronic device transmit a message) included in the messages according to the embodiments in FIG. S 6A and 6B described above, the position of the electronic device 210 may be accurately measured. Accordingly, the accurate positioning of the electronic device 210 is possible even in a non-line of sight (NLoS) state in which an obstacle exists between the electronic device 210 and at least one external electronic device (e.g., the first external electronic device 220) or in a state in which link quality is not good.

The method for measuring a position of an electronic device 210 according to various embodiments may include, when a first message for range measurement transmitted by a first external electronic device 220 is received through the communication circuit (e.g., the communication circuit 310 in FIG. 3), an operation of storing a reception time of the first message in the memory (e.g., the memory 320 in FIG. 3), when a second message including a first response time is received from a second external electronic device 230 through the communication circuit 310 in response to the first message, an operation of storing the first response time, and a reception time and a transmission time of the second message in the memory 320, when a third message including a second response time and a third response time is received from a third external electronic device 240 in response to the first message, an operation of storing the second response time, the third response time, and a reception time and a transmission time of the third message in the memory 320, and when a fourth message including a fourth response time, a fifth response time, and a sixth response time is received from a fourth external electronic device 250 in response to the first message, an operation of storing the fourth response time, the fifth response time, the sixth response time, and a reception time and a transmission time of the fourth message in the memory 320.

The method for measuring a position of the electronic device 210 according to various embodiments may further include an operation of calculating a time difference arrival between the electronic device 210 and the first external electronic device 220, the second external electronic device 230, the third external electronic device 240, and the fourth external electronic device 250 based on the first response time, the second response time, the third response time, the fourth response time, the fifth response time and the sixth response time, and an operation of measuring a position of the electronic device 210 based on the calculated time difference of arrival.

The method for measuring a position of the electronic device 210 according to various embodiments may further include an operation of compensating for a clock drift between the electronic device 210 and the first external electronic device 220, the second external electronic device 230, the third external electronic device 240, and the fourth external electronic device 250 based on the reception time of the first message, the reception time and transmission time of the second message, the reception time and transmission time of the third message, the reception time and transmission time of the fourth message, the reception time of the fifth message, the reception time and transmission time of the sixth message, the reception time and transmission time of the seventh message, and the reception time and transmission time of the eighth message, an operation of calculating a time difference of arrival (TDoA) between the electronic device 210 and the first external electronic device 220, the second external electronic device 230, the third external electronic device 240, and the fourth external electronic device 250 based on the compensated clock drift, and an operation of measuring a position of the electronic device 210 based on positions of multiple external electronic devices, based on the calculated time difference of arrival.

The method for measuring a position of the electronic device 210 according to various embodiments may further include, when the fifth message including a seventh response time, an eighth response time, and a ninth response time and transmitted by a first external electronic device 220 is received through the communication circuit 310, an operation of storing a reception time of the fifth message in the memory 320, when a sixth message including a transmission time and transmitted by the second external electronic device 230 is received through the communication circuit 310 in response to the fifth message, an operation of storing a reception time and a transmission time of the sixth message in the memory 320, when a seventh message including a transmission time and transmitted by the third external electronic device 240 is received through the communication circuit 310 in response to the fifth message, store a reception time and a transmission time of the seventh message in the memory 320, and when an eighth message including a transmission time and transmitted by the fourth external electronic device 250 is received from through the communication circuit 310 in response to the fifth message, an operation of storing a reception time and a transmission time of the eighth message in the memory 320, wherein the seventh response time may be a difference between a reception time of the second message which is received by the first external electronic device 220 from the second external electronic device 230 and a transmission time of the fifth message transmitted by the first external electronic device 220, the eighth response time may be a difference between a reception time of the third message which is received by the first external electronic device 220 from the third external electronic device 240 and a transmission time of the fifth message transmitted by the first external electronic device 220, and the ninth response time may be a difference between a reception time of the fourth message which is received by the first external electronic device 220 from the fourth external electronic device 250 and a transmission time of the fifth message transmitted by the first external electronic device 220.

In various embodiments, the sixth message may include a tenth response time which is calculated by the second external electronic device 230 with respect to a difference between a reception time of the third message which is received by the second external electronic device 230 from the third external electronic device 240 and a transmission time of the sixth message transmitted by the second external electronic device 230, an eleventh response time which is calculated by the second external electronic device 230 with respect to a difference between a reception time of the fourth message which is received by the second external electronic device 230 from the fourth external electronic device 250 and a transmission time of the sixth message transmitted by the second external electronic device 230, and a twelfth response time which is calculated by the second external electronic device 230 with respect to a difference between a reception time of the fifth message which is received by the second external electronic device 230 from the first external electronic device 220 and a transmission time of the sixth message transmitted by the second external electronic device 230.

In various embodiments, the seventh message may include a thirteenth response time which is calculated by the third external electronic device 240 with respect to a difference between a reception time of the fourth message which is received by the third external electronic device 240 from the fourth external electronic device 250 and a transmission time of the seventh message transmitted by the third external electronic device 240, an fourteenth response time which is calculated by the third external electronic device 240 with respect to a difference between a reception time of the fifth message which is received by the third external electronic device 240 from the first external electronic device 220 and a transmission time of the seventh message transmitted by the third external electronic device 240, and a fifteenth response time which is calculated by the third external electronic device 240 with respect to a difference between a reception time of the sixth message which is received by the third external electronic device 240 from the second external electronic device 230 and a transmission time of the seventh message transmitted by the third external electronic device 240.

In various embodiments, the eighth message may include a sixteenth response time which is calculated by the fourth external electronic device 250 with respect to a difference between a reception time of the fifth message which is received by the fourth external electronic device 250 from the first external electronic device 220 and a transmission time of the eighth message transmitted by the fourth external electronic device 250, a seventeenth response time which is calculated by the fourth external electronic device 250 with respect to a difference between a reception time of the sixth message which is received by the fourth external electronic device 250 from the second external electronic device 230 and a transmission time of the eighth message transmitted by the fourth external electronic device 250, and an eighteenth response time which is calculated by the fourth external electronic device 250 with respect to a difference between a reception time of the seventh message which is received by the fourth external electronic device 250 from the third external electronic device 240 and a transmission time of the eighth message transmitted by the fourth external electronic device 250.

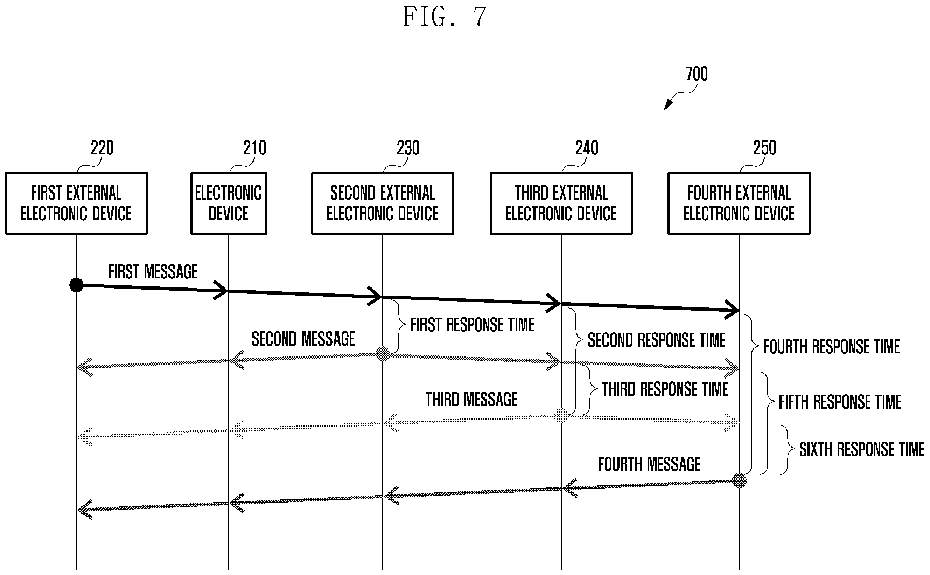

FIG. 7 is a diagram illustrating a signal flow between an electronic device 210 and multiple external electronic devices 220, 230, 240, 250 according to an embodiment of the disclosure.

FIG. 7 according to various embodiments is a diagram illustrating an operation of message transmission/reception between the electronic device 210 and external electronic devices (e.g., at least one of the first external electronic device 220, the second external electronic device 230, the third external electronic device 240, or the fourth external electronic device 250) in an SS-TWR manner.

Referring to FIG. 7, in a diagram 700, the first external electronic device 220 may transmit a first message for range measurement. For example, the first external electronic device 220 may transmit the first message for range measurement in a range measurement period (e.g., a ranging round). For example, the first message may include a poll message.

In an embodiment, the second external electronic device 230 may transmit a second message (e.g., a response message) to the first external electronic device 220 in response to the first message. At least one of the electronic device 210, the third external electronic device 240, or the fourth external electronic device 250 existing in the same network may snip and receive the second message transmitted by the second external electronic device 230 to the first external electronic device 220. For another example, the second external electronic device 230 may broadcast the second message (e.g., a response message) in response to the first message. At least one of the electronic device 210, the first external electronic device 220, the third external electronic device 240, or the fourth external electronic device 250 may receive the second message broadcasted by the second external electronic device 230.

In another embodiment, the second external electronic device 230 may calculate a first response time with respect to a difference between a reception time of the first message transmitted by the first external electronic device 220 and a transmission time of the second message (e.g., a response message) to be transmitted by the second external electronic device 230 in response to the first message. The second external electronic device 230 may transmit the second message including the calculated first response time.

In another embodiment, the first response time included in the second message transmitted by the second external electronic device 230 may be included in a "Responder Reply Time" parameter of the second message according to Table 2 above and transmitted.

In another embodiment, the third external electronic device 240 may transmit a third message (e.g., a response message) to the first external electronic device 220 in response to the first message. At least one of the electronic device 210, the second external electronic device 230, or the fourth external electronic device 250 existing in the same network may snip and receive the third message transmitted by the third external electronic device 240 to the first external electronic device 220. For another example, the third external electronic device 240 may broadcast the third message (e.g., a response message) in response to the first message. At least one of the electronic device 210, the first external electronic device 220, the second external electronic device 230, or the fourth external electronic device 250 may receive the third message broadcasted by the third external electronic device 240.

In an embodiment, the third external electronic device 240 may calculate a second response time with respect to a difference between a reception time of the first message transmitted by the first external electronic device 220 and a transmission time of the third message (e.g., a response message) to be transmitted by the third external electronic device 240 in response to the first message. In addition, the third external electronic device 240 may calculate a third response time with respect to a difference between a reception time of the second message received from the second external electronic device 230 and a transmission time of the third message (e.g., a response message) to be transmitted by the third external electronic device 240 in response to the first message. The third external electronic device 240 may transmit the third message including the calculated second response time and third response time.

In another embodiment, the second response time and the third response time included in the third message transmitted by the third external electronic device 240 may be included in a "Responder Reply Time" parameter of the third message according to Table 2 above to be transmitted.

In another embodiment, the fourth external electronic device 250 may transmit a fourth message (e.g., a response message) to the first external electronic device 220 in response to the first message. At least one of the electronic device 210, the second external electronic device 230, or the third external electronic device 240 existing in the same network may snip and receive the fourth message transmitted by the fourth external electronic device 250 to the first external electronic device 220. For another example, the fourth external electronic device 250 may broadcast the fourth message (e.g., a response message) in response to the first message. At least one of the electronic device 210, the first external electronic device 220, the second external electronic device 230, or the third external electronic device 240 may receive the fourth message broadcasted by the fourth external electronic device 250.

In another embodiment, the fourth external electronic device 250 may calculate a fourth response time with respect to a difference between a reception time of the first message transmitted by the first external electronic device 220 and a transmission time of the fourth message (e.g., a response message) to be transmitted by the fourth external electronic device 250 in response to the first message. In addition, the fourth external electronic device 250 may calculate a fifth response time with respect to a difference between a reception time of the second message received from the second external electronic device 230 and a transmission time of the fourth message (e.g., a response message) to be transmitted by the fourth external electronic device 250 in response to the first message. In addition, the fourth external electronic device 250 may calculate a sixth response time with respect to a difference between a reception time of the third message received from the third external electronic device 240 and a transmission time of the fourth message (e.g., a response message) to be transmitted by the fourth external electronic device 250 in response to the first message. The fourth external electronic device 250 may transmit the fourth message including the calculated fourth response time, fifth response time, and sixth response time.

In another embodiment, the fourth response time, the fifth response time, and the sixth response time included in the fourth message transmitted by the fourth external electronic device 250 may be included in a "Responder Reply Time" parameter of the fourth message according to Table 2 above and transmitted.

In various embodiments, by calculating a time difference of arrival between the electronic device 210 and multiple electronic devices in a mesh network form, based on messages including response times received from external electronic devices (e.g., at least one of the first external electronic device 220, the second external electronic device 230, the third external electronic device 240, or the fourth external electronic device 250), the electronic device 210 may accurately measure the position of the electronic device 210.

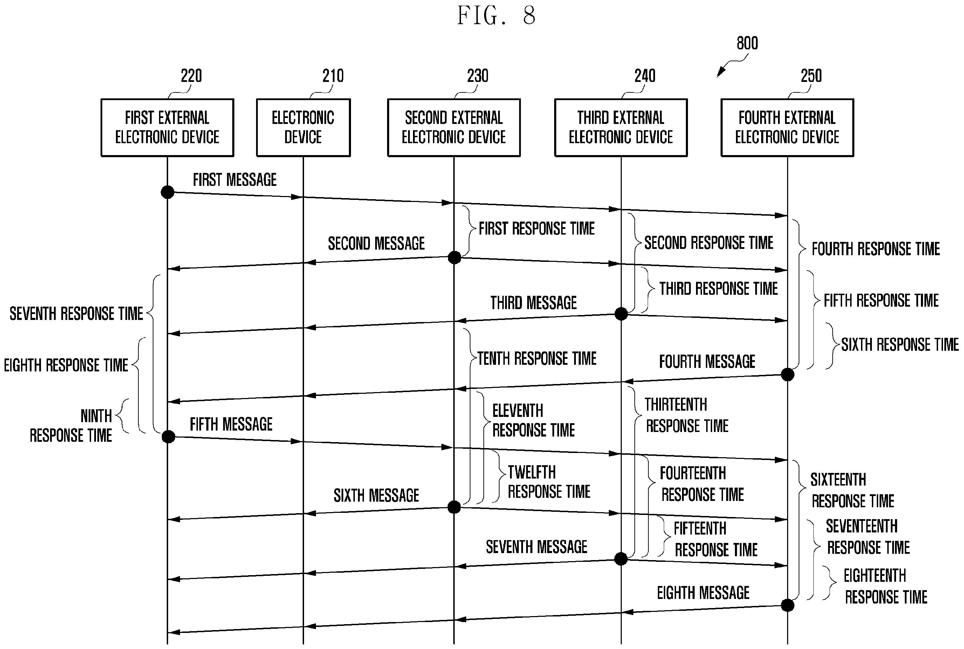

FIG. 8 is a diagram illustrating a signal flow between an electronic device 210 and multiple external electronic devices 220, 230, 240, 250 according to an embodiment of the disclosure.

In various embodiments, transmission/reception operations of the first message to the eighth message to be described below may be performed within a first range measurement period (e.g., a first range round).

FIG. 8 according to various embodiments is a diagram illustrating an operation of message transmission/reception between the electronic device 210 and external electronic devices (e.g., at least one of the first external electronic device 220, the second external electronic device 230, the third external electronic device 240, or the fourth external electronic device 250) in a DS-TWR manner.

FIG. 8 according to various embodiments may be additional operations of FIG. 7 described above. For example, in FIG. 8, the electronic device 210 and multiple external electronic devices 220, 230, 240, 250 may perform an additional operation to FIG. 7 described above, for example, an operation of transmitting/receiving the fifth message to eighth message to compensate for a clock drift between the electronic device 210 and the multiple external electronic devices 220, 230, 240, 250.

The operation of transmitting/receiving the first message to the fourth message between the electronic device 210 and the multiple external electronic devices 220, 230, 240, 250 in FIG. 8 according to various embodiments is identical to the operation of transmitting/receiving the first message to the fourth message between the electronic device 210 and the multiple external electronic devices 220, 230, 240, 250 in FIG. 7, and thus a detailed description thereof may be substituted by the description of FIG. 7.

Referring to FIG. 8, in a diagram 800, the first external electronic device 220 may transmit (e.g., broadcast) a first message (e.g., a poll message) for range measurement in a range measurement period (e.g., a ranging round). At least one of the electronic device 210, the second external electronic device 230, the third external electronic device 240, or the fourth external electronic device 250 existing in the same network may receive the first message broadcasted by the first external electronic device 220.

In an embodiment, the second external electronic device 230 may transmit a second message (e.g., a response message) to the first external electronic device 220 in response to the first message. At least one of the electronic device 210, the third external electronic device 240, or the fourth external electronic device 250 existing in the same network may snip and receive the second message transmitted by the second external electronic device 230 to the first external electronic device 220. For another example, the second external electronic device 230 may broadcast the second message (e.g., a response message) in response to the first message. At least one of the electronic device 210, the first external electronic device 220, the third external electronic device 240, or the fourth external electronic device 250 may receive the second message broadcasted by the second external electronic device 230.

In another embodiment, the second external electronic device 230 may transmit a second message including a first response time with respect to a difference between a reception time of the first message transmitted by the first external electronic device 220 and a transmission time of the second message (e.g., a response message) to be transmitted by the second external electronic device 230 in response to the first message.

In an embodiment, the first response time included in the second message transmitted by the second external electronic device 230 may be included in a "Responder Reply Time" parameter of the second message according to Table 2 above and transmitted.

In another embodiment, the third external electronic device 240 may transmit a third message (e.g., a response message) to the first external electronic device 220 in response to the first message. At least one of the electronic device 210, the second external electronic device 230, or the fourth external electronic device 250 existing in the same network may snip and receive the third message transmitted by the third external electronic device 240 to the first external electronic device 220. For another example, the third external electronic device 240 may broadcast the third message (e.g., a response message) in response to the first message. At least one of the electronic device 210, the first external electronic device 220, the second external electronic device 230, or the fourth external electronic device 250 may receive the third message broadcasted by the third external electronic device 240.

In another embodiment, the third external electronic device 240 may transmit a third message including a second response time with respect to a difference between a reception time of the first message transmitted by the first external electronic device 220 and a transmission time of the third message (e.g., a response message) to be transmitted by the third external electronic device 240 in response to the first message and a third response time with respect to a difference between a reception time of the second message received from the second external electronic device 230 and a transmission time of the third message (e.g., a response message) to be transmitted by the third external electronic device 240 in response to the first message.

In another embodiment, the second response time and the third response time included in the third message transmitted by the third external electronic device 240 may be included in a "Responder Reply Time" parameter of the third message according to Table 2 above and transmitted.

In another embodiment, the fourth external electronic device 250 may transmit a fourth message (e.g., a response message) to the first external electronic device 220 in response to the first message. At least one of the electronic device 210, the second external electronic device 230, or the third external electronic device 240 existing in the same network may snip and receive the fourth message transmitted by the fourth external electronic device 250 to the first external electronic device 220. For another example, the fourth external electronic device 250 may broadcast the fourth message (e.g., a response message) in response to the first message. At least one of the electronic device 210, the first external electronic device 220, the second external electronic device 230, or the third external electronic device 240 may receive the fourth message broadcasted by the fourth external electronic device 250.

In another embodiment, the fourth external electronic device 250 may transmit a fourth message including a fourth response time with respect to a difference between a reception time of the first message transmitted by the first external electronic device 220 and a transmission time of the fourth message (e.g., a response message) to be transmitted by the fourth external electronic device 250 in response to the first message, a fifth response time with respect to a difference between a reception time of the second message received from the second external electronic device 230 and a transmission time of the fourth message (e.g., a response message) to be transmitted by the fourth external electronic device 250 in response to the first message, and a sixth response time with respect to a difference between a reception time of the third message received from the third external electronic device 240 and a transmission time of the fourth message (e.g., a response message) to be transmitted by the fourth external electronic device 250 in response to the first message.

In another embodiment, the fourth response time, the fifth response time, and the sixth response time included in the fourth message transmitted by the fourth external electronic device 250 may be included in a "Responder Reply Time" parameter of the fourth message according to Table 2 above and transmitted.

In another embodiment, the first external electronic device 220 may transmit a fifth message to at least one of the electronic device 210, the second external electronic device 230, the third external electronic device 240, or the fourth external electronic device 250. For example, the first external electronic device 220 may transmit a fifth message to each electronic device (e.g., the electronic device 210, the second external electronic device 230, the third external electronic device 240, and the fourth external electronic device 250) in a unicast manner. Each electronic device (e.g., the electronic device 210, the second external electronic device 230, the third external electronic device 240, and the fourth external electronic device 250) existing in the same network may snip and receive the second message transmitted by the first external electronic device 220 to other electronic devices. Alternatively, the first external electronic device 220 may broadcast the fifth message. At least one of the electronic device 210, the second external electronic device 230, the third external electronic device 240, or the third external electronic device 240 existing in the same network may receive the fifth message broadcasted by the first external electronic device 220. The fifth message may be a final message.

In various embodiments, the fifth message (e.g., a final message) may include a transmission time (e.g., a TX timestamp) when the fifth message is transmitted. The transmission time of the fifth message may be added to a "TX Timestamp" of the fifth message according to Table 1 above and transmitted. However, without limitation thereto, the fifth message may include a seventh response time calculated with respect to a difference between a reception time of the second message received from the second external electronic device 230 and a transmission time of the fifth message transmitted by the first external electronic device 220, an eighth response time calculated with respect to a difference between a reception time of the third message received from the third external electronic device 240 and a transmission time of the fifth message transmitted by the first external electronic device 220, and a ninth response time calculated with respect to a difference between a reception time of the fourth message received from the fourth external electronic device 250 and a transmission time of the fifth message transmitted by the first external electronic device 220. In an embodiment, the seventh response time, the eighth response time, and the ninth response time included in the fifth message transmitted by the first external electronic device 220 may be included in a "Reply Time List" parameter of the fifth message according to Table 3 above and transmitted.

In another embodiment, the second external electronic device 230 may transmit a sixth message (e.g., a response message) to the first external electronic device 220 in response to the fifth message. At least one of the electronic device 210, the third external electronic device 240, or the fourth external electronic device 250 existing in the same network may snip and receive the sixth message transmitted by the second external electronic device 230 to the first external electronic device 220. For another example, the second external electronic device 230 may broadcast the sixth message (e.g., a response message) in response to the first message. At least one of the electronic device 210, the first external electronic device 220, the third external electronic device 240, or the fourth external electronic device 250 may receive the sixth message broadcasted by the second external electronic device 230.

In various embodiments, the sixth message may include a transmission time when the sixth message is transmitted. The transmission time of the sixth message may be added to a "TX Timestamp" of the sixth message according to Table 2 above and transmitted. However, without limitation thereto, the sixth message may include a tenth response time with respect to a difference between a reception time of the third message received from the third external electronic device 240 and a transmission time of the sixth message transmitted by the second external electronic device 230, an eleventh response time with respect to a difference between a reception time of the fourth message received from the fourth external electronic device 250 and a transmission time of the sixth message transmitted by the second external electronic device 230, and a twelfth response time with respect to a difference between a reception time of the fifth message received from the first external electronic device 220 and a transmission time of the sixth message transmitted by the second external electronic device 230.

In another embodiment, the third external electronic device 240 may transmit a seventh message (e.g., a response message) to the first external electronic device 220 in response to the fifth message. At least one of the electronic device 210, the second external electronic device 230, or the fourth external electronic device 250 existing in the same network may snip and receive the seventh message transmitted by the third external electronic device 240 to the first external electronic device 220. For another example, the third external electronic device 240 may broadcast the seventh message (e.g., a response message) in response to the first message. At least one of the electronic device 210, the first external electronic device 220, the second external electronic device 230, or the fourth external electronic device 250 may receive the seventh message broadcasted by the third external electronic device 240.

In various embodiments, the seventh message may include a transmission time when the seventh message is transmitted. The transmission time of the seventh message may be added to a "TX Timestamp" of the seventh message according to Table 2 above and transmitted. Without limitation thereto, the seventh message may include a thirteenth response time with respect to a difference between a reception time of the fourth message received from the fourth external electronic device 250 and a transmission time of the seventh message transmitted by the third external electronic device 240, a fourteenth response time with respect to a difference between a reception time of the fifth message received from the first external electronic device 220 and a transmission time of the seventh message transmitted by the third external electronic device 240, and a fifteenth response time with respect to a difference between a reception time of the sixth message received from the second external electronic device 230 and a transmission time of the seventh message transmitted by the third external electronic device 240.

In an embodiment, the fourth external electronic device 250 may transmit an eighth message (e.g., a response message) to the first external electronic device 220 in response to the fifth message. At least one of the electronic device 210, the second external electronic device 230, or the third external electronic device 240 existing in the same network may snip and receive the eighth message transmitted by the fourth external electronic device 250 to the first external electronic device 220. For another example, the fourth external electronic device 250 may broadcast the eighth message (e.g., a response message) in response to the first message. At least one of the electronic device 210, the first external electronic device 220, the second external electronic device 230, or the third external electronic device 240 may receive the eighth message broadcasted by the fourth external electronic device 250.

In various embodiments, the eighth message may include a transmission time when the eighth message is transmitted. The transmission time of the eighth message may be added to a "TX Timestamp" of the eighth message according to Table 2 above and received. Without limitation thereto, the eighth message may include a sixteenth response time with respect to a difference between a reception time of the fifth message received from the first external electronic device 220 and a transmission time of the eighth message transmitted by the fourth external electronic device 250, a seventeenth response time with respect to a difference between a reception time of the sixth message received from the second external electronic device 230 and a transmission time of the eighth message transmitted by the fourth external electronic device 250, and an eighteenth response time with respect to a difference between a reception time of the seventh message received from the third external electronic device 240 and a transmission time of the eighth message transmitted by the fourth external electronic device 250.

In various embodiments, the operation of transmitting the eighth message (e.g., a response message) by the fourth external electronic device 250 transmits in response to the fifth message may be omitted. For example, the electronic device 210 may calculate a time difference of arrival between the electronic device 210 and external electronic devices 220, 230, 240, and 250 by using the first response time included in the second message, the second response time and the third response time included in the third message, and the fourth response time, the fifth response time, and the sixth response time included in the fourth message, and thus the operation of transmitting the eighth message may be omitted. For another example, the electronic device 210 may compensate for a clock drift between the electronic device 210 and external electronic devices 220, 230, 240, and 250 by using the seventh response time, the eighth response time, the ninth response time included in the fifth message, the tenth response time, the eleventh response time, and the twelfth response time included in the sixth message, and the thirteenth response time, the fourteenth response time, and the fifteenth response time included in the seventh message, and thus the operation of transmitting the eighth message may be omitted.

In various embodiments, messages (e.g., the first message to the eighth message) transmitted or received among at least one of the first external electronic device 220, the second external electronic device 230, the third external electronic device 240, or the fourth external electronic device 250 may be transmitted or received in a packet form. However, the disclosure is not limited thereto.

In various embodiments, the operation of transmitting the fifth message (e.g., a final message) by the first external electronic device 220 may be omitted. Each of the second external electronic device 230, the third external electronic device 240, and the fourth external electronic device 250 may transmit a sixth message, a seventh message, and an eight message (e.g., the sixth message, the seventh message, and the eighth message excluding response times) including only transmission times.

Referring to FIG. 8 according to various embodiments, by performing operations of transmitting the fifth message to the eighth message in addition to FIG. 7, a clock drift between the electronic device 210 and multiple external electronic devices 220, 230, 240, 250 may be compensated, and a time difference of arrival between the electronic device 210 and multiple external electronic devices 220, 230, 240, 250 is calculated based on the compensated clock drift so that a position of the electronic device 210 may be measured more accurately.

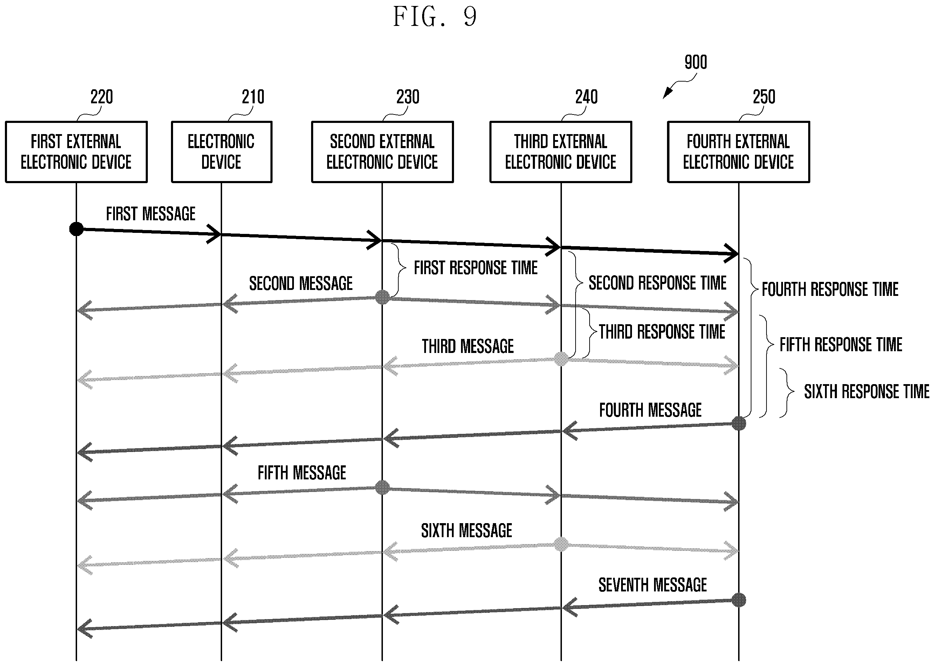

FIG. 9 is a diagram illustrating a signal flow between an electronic device and multiple external electronic devices according to an embodiment of the disclosure.

FIG. 9 according to various embodiments may be additional operations of FIG. 7 described above. For example, in FIG. 9, the electronic device 210 and multiple external electronic devices 220, 230, 240, 250 may perform an additional operation to FIG. 7 described above, for example, an operation of transmitting/receiving the fifth message to seventh message to compensate for a clock drift between the electronic device 210 and the multiple external electronic devices 220, 230, 240, 250.

FIG. 9 according to various embodiments, compared to FIG. 8, may be an embodiment from which the operation of transmitting the fifth message (e.g., a final message) by the first external electronic device 220 is omitted.

The operation of transmitting/receiving the first message to the fourth message between the electronic device 210 and the multiple external electronic devices 220, 230, 240, 250 in FIG. 9 according to various embodiments is identical to the operation of transmitting/receiving the first message to the fourth message between the electronic device 210 and the multiple external electronic devices 220, 230, 240, 250 in FIG. 7, and thus a detailed description thereof may be substituted by the description of FIG. 7.

Referring to FIG. 9, in a diagram 900, the first external electronic device 220 may transmit (e.g., broadcast) a first message for range measurement. For example, the first message may include a poll message.

In an embodiment, the second external electronic device 230 may transmit the second message (e.g., a response message) including a first response time, in response to the first message. For example, the first response time may correspond to a difference, which is calculated by the second external electronic device 230, between a reception time of the first message transmitted by the first external electronic device 220 and a transmission time of the second message (e.g., a response message) to be transmitted by the second external electronic device 230 in response to the first message. At least one of the electronic device 210, the third external electronic device 240, or the fourth external electronic device 250 existing in the same network may receive the second message transmitted by the second external electronic device 230 (e.g., receive the broadcasted second message or snip and receive the second message transmitted by the second external electronic device 230 to the first external electronic device 220).

In another embodiment, the third external electronic device 240 may transmit the third message (e.g., a response message) including a second response time and a third response time, in response to the first message. For example, the second response time may correspond to a difference, which is calculated by the third external electronic device 240, between a reception time of the first message transmitted by the first external electronic device 220 and a transmission time of the third message (e.g., a response message) to be transmitted by the third external electronic device 240 in response to the first message. The third response time may correspond to a time with respect to a difference, which is calculated by the third external electronic device 240, between a reception time of the second message transmitted by the second external electronic device 230 and a transmission time of the third message (e.g., a response message) to be transmitted by the third external electronic device 240 in response to the first message. At least one of the electronic device 210, the second external electronic device 230, or the fourth external electronic device 250 existing in the same network may receive the third message transmitted by the third external electronic device 240 (e.g., receive the broadcasted third message or snip and receive the third message transmitted by the third external electronic device 240 to the first external electronic device 220).

In another embodiment, the fourth external electronic device 250 may transmit the fourth message (e.g., a response message) including a fourth response time, the fifth response time, and a sixth response time, in response to the first message. For example, the fourth response time may correspond to a difference, which is calculated by the fourth external electronic device 250, between a reception time of the first message transmitted by the first external electronic device 220 and a transmission time of the fourth message (e.g., a response message) to be transmitted by the fourth external electronic device 250 in response to the first message. The fifth response time may correspond to a difference, which is calculated by the fourth external electronic device 250, between a reception time of the second message transmitted by the second external electronic device 230 and a transmission time of the fourth message (e.g., a response message) to be transmitted by the fourth external electronic device 250 in response to the first message. The sixth response time may correspond to a difference, which is calculated by the fourth external electronic device 250, between a reception time of the third message transmitted by the third external electronic device 240 and a transmission time of the fourth message (e.g., a response message) to be transmitted by the fourth external electronic device 250 in response to the first message. At least one of the electronic device 210, the second external electronic device 230, or the third external electronic device 240 existing in the same network may receive the fourth message transmitted by the fourth external electronic device 250 (e.g., receive the broadcasted fourth message or snip and receive the fourth message transmitted by the fourth external electronic device 250 to the first external electronic device 220).

In another embodiment, the second external electronic device 230 may transmit the fifth message. For example, the fifth message may be transmitted to the first external electronic device 220 in a unicasting manner. At least one of the electronic device 210, the third external electronic device 240, or the fourth external electronic device 250 existing in the same network may snip and receive the fifth message transmitted by the second external electronic device 230 to the first external electronic device 220. For another example, the fifth message may be transmitted in a broadcasting manner. At least one of the electronic device 210, the first external electronic device 220, the third external electronic device 240, or the fourth external electronic device 250 may receive the fifth message broadcasted by the second external electronic device 230.

In an embodiment, the fifth message may include a transmission time (e.g., a TX timestamp) when the fifth message is transmitted. The transmission time of the fifth message may be added to a "TX Timestamp" of the fifth message according to Table 2 above and transmitted.

In another embodiment, the third external electronic device 240 may transmit the sixth message. For example, the sixth message may be transmitted to the first external electronic device 220 in a unicasting manner. At least one of the electronic device 210, the second external electronic device 230, or the fourth external electronic device 250 existing in the same network may snip and receive the sixth message transmitted by the third external electronic device 240 to the first external electronic device 220. For another example, the sixth message may be transmitted in a broadcasting manner. At least one of the electronic device 210, the first external electronic device 220, the second external electronic device 230, or the fourth external electronic device 250 may receive the sixth message broadcasted by the third external electronic device 240.

In another embodiment, the sixth message may include a transmission time when the sixth message is transmitted. The transmission time of the sixth message may be added to a "TX Timestamp" of the sixth message according to Table 2 above and transmitted.

In another embodiment, the fourth external electronic device 250 may transmit the seventh message. For example, the seventh message may be transmitted to the first external electronic device 220 in a unicasting manner. At least one of the electronic device 210, the second external electronic device 230, or the third external electronic device 240 existing in the same network may snip and receive the seventh message transmitted by the fourth external electronic device 250 to the first external electronic device 220. For another example, the seventh message may be transmitted in a broadcasting manner. At least one of the electronic device 210, the first external electronic device 220, the second external electronic device 230, or the third external electronic device 240 may receive the seventh message broadcasted by the fourth external electronic device 250.

In various embodiments, the seventh message may include a transmission time when the seventh message is transmitted. The transmission time of the seventh message may be added to a "TX Timestamp" of the seventh message according to Table 2 above and transmitted.

The above-described transmission times (or the response times) included in the fifth message, the sixth message, and the seventh message according to various embodiments may be used for compensating for a clock drift with external electronic devices (e.g., at least one of the first external electronic device 220, the second external electronic device 230, the third external electronic device 240, or the fourth external electronic device 250) by the electronic device 210.

Referring to FIG. 9, the second external electronic device 230 having received the first message transmitted by the first external electronic device 220 may transmit two response messages (e.g., the second message and the fifth message transmitted in a first range measurement period). Furthermore, the third external electronic device 240 having received the first message transmitted by the first external electronic device 220 may transmit two response messages (e.g., the third message and the sixth message transmitted in a first range measurement period). Furthermore, the fourth external electronic device 250 having received the first message transmitted by the first external electronic device 220 may transmit two response messages (e.g., the fourth message and the seventh message transmitted in a first range measurement period). The electronic device 210 may compensate for a clock drift between the electronic device 210 and multiple external electronic devices based on the response times included in the two response messages from each external electronic device and then calculate a time difference of arrival between the electronic device 210 and multiple external electronic devices.

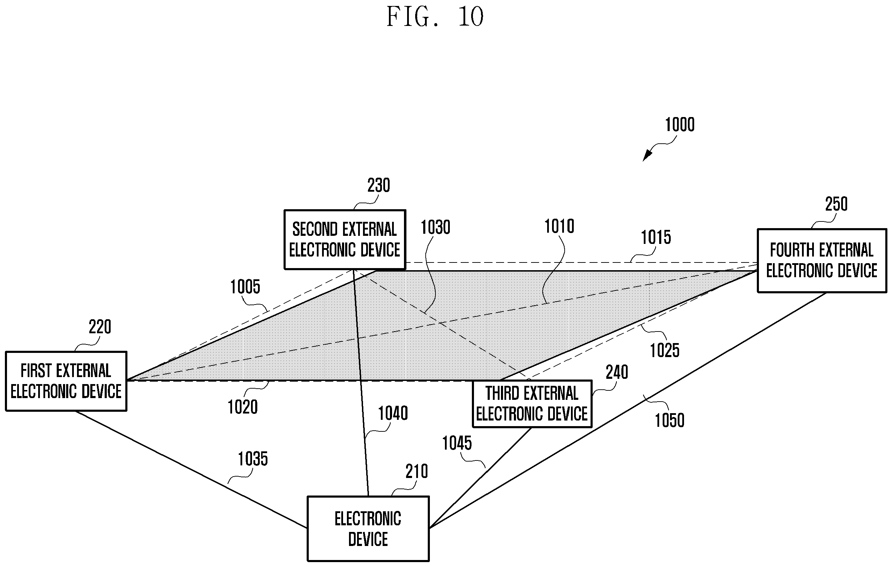

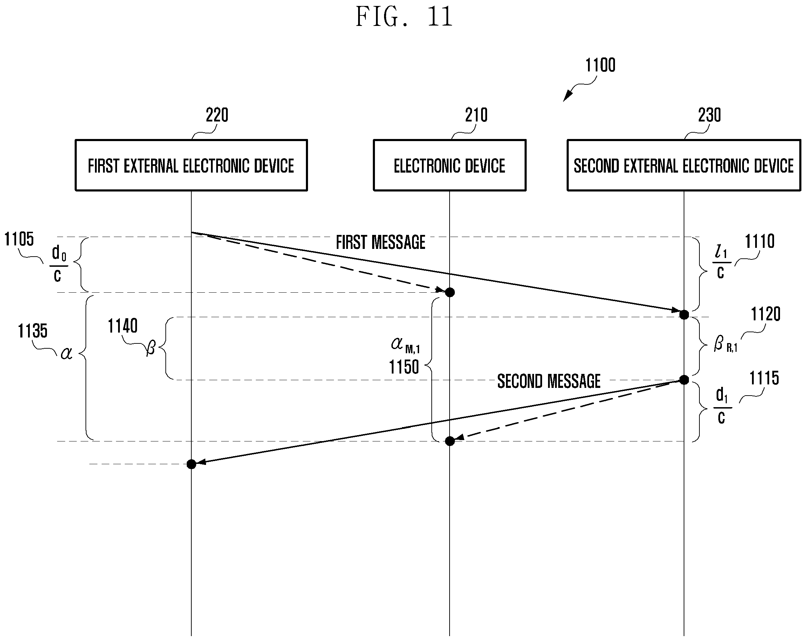

A value for compensating for a clock drift and a method for calculating a time difference of arrival described above according to various embodiments will be described in detail with reference to FIGS. 10 and 11 to be described below.

FIG. 10 is a diagram explaining a method for calculating a time difference of arrival between an electronic device and multiple external electronic devices according to an embodiment of the disclosure.

Referring to FIG. 10, a diagram 1000 the electronic device 210 may calculate a time difference of arrival (TDoA) based on the number of pairs of external electronic devices positioned in the same network. For example, the number of external electronic devices may be four and the number of pairs of the external electronic devices is 6. For example, the pairs may include a first pair including a first external electronic device 220 and the second external electronic device 230, a second pair including the first external electronic device 220 and the third external electronic device 240, a third pair including the first external electronic device 220 and the fourth external electronic device 250, a fourth pair including the second external electronic device 230 and the third external electronic device 240, a fifth pair including the second external electronic device 230 and the fourth external electronic device 250, and a sixth pair including the third external electronic device 240 and the fourth external electronic device 250.

In an embodiment, a distance 1005 between the first external electronic device 220 and the second external electronic device 230 included in the first pair may be calculated based on a first response time (e.g., the first response time in FIGS. 7, 8, and 9) with respect to a difference between a reception time when the second external electronic device 230 receives the first message transmitted by the first external electronic device 220 and a transmission time of the second message (e.g., a response message) transmitted from the second external electronic device 230 in response to the first message.

In another embodiment, a distance 1020 between the first external electronic device 220 and the third external electronic device 240 included in the second pair may be calculated based on a second response time (e.g., the second response time in FIGS. 7, 8, and 9) with respect to a difference between a reception time when the third external electronic device 240 receives the first message transmitted by the first external electronic device 220 and a transmission time of the third message transmitted from the third external electronic device 240 in response to the first message.

In another embodiment, a distance 1010 between the first external electronic device 220 and the fourth external electronic device 250 included in the third pair may be calculated based on a fourth response time (e.g., the fourth response time in FIGS. 7, 8, and 9) with respect to a difference between a reception time when the fourth external electronic device 250 receives the first message transmitted by the first external electronic device 220 and a transmission time of the fourth message transmitted from the fourth external electronic device 250 in response to the first message.

In another embodiment, a distance 1030 between the second external electronic device 230 and the third external electronic device 240 included in the fourth pair may be calculated based on a third response time (e.g., the third response time in FIGS. 7, 8, and 9) with respect to a difference between a reception time when the third external electronic device 240 receives the second message transmitted by the second external electronic device 230 and a transmission time of the fourth message transmitted from the fourth external electronic device 250 in response to the first message.

In another embodiment, a distance 1015 between the second external electronic device 230 and the fourth external electronic device 250 included in the fifth pair may be calculated based on a fifth response time (e.g., the fifth response time in FIGS. 7, 8, and 9) with respect to a difference between a reception time when the fourth external electronic device 250 receives the second message transmitted by the second external electronic device 230 and a transmission time of the fourth message transmitted from the fourth external electronic device 250 in response to the first message.

In another embodiment, a distance 1025 between the third external electronic device 240 and the fourth external electronic device 250 included in the sixth pair may be calculated based on a sixth response time (e.g., the sixth response time in FIGS. 7, 8, and 9) with respect to a difference between a reception time when the fourth external electronic device 250 receives the third message transmitted by the third external electronic device 240 and a transmission time of the fourth message transmitted from the fourth external electronic device 250 in response to the first message.

In various embodiments, the electronic device 210 may calculate at least one of a distance 1035 between the electronic device 210 and the first external electronic device 220, a distance 1040 between the electronic device 210 and the second external electronic device 230, a distance 1045 between the electronic device 210 and the third external electronic device 240, or a distance 1050 between the electronic device 210 and the fourth external electronic device 250, based on the time information (e.g., the first to sixth response times, the reception times when each external electronic device receives transmitted from other external electronic device, and the transmission times when each external electronic device transmits the message) included in the messages transmitted/received among the above-described external electronic devices and the distances 1005, 1010, 1015, 1020, 1025, 1030 among the external electronic devices.

In various embodiments, as described above with reference to FIGS. 8 and 9, the electronic device 210 may calculate a time difference of arrival (TDoA) between the electronic device 210 and multiple electronic devices by using messages including response times and transmitted or received among each of multiple external electronic devices (e.g., at least one of the first external electronic device 220, the second external electronic device 230, the third external electronic device 240, or the fourth external electronic device 250). For example, a time difference of arrival among the electronic device 210, the first external electronic device 220, and the second external electronic device 230 may be calculated as a value obtained by dividing a difference between a distance 1035 between the electronic device 210 and the first external electronic device 220 and a distance 1040 between the electronic device 210 and the second external electronic device 230 by the speed of light (a constant) (e.g., c). For another example, a time difference of arrival among the electronic device 210, the second external electronic device 230, and the third external electronic device 240 may be calculated as a value obtained by dividing a difference between a distance 1040 between the electronic device 210 and the second external electronic device 230 and a distance 1045 between the electronic device 210 and the third external electronic device 240 by the speed of light (a constant) (e.g., c). For still another example, a time difference of arrival among the electronic device 210, the third external electronic device 240, and the fourth external electronic device 250 may be calculated as a value obtained by dividing a distance 1045 between the electronic device 210 and the third external electronic device 240 and a distance 1050 between the electronic device 210 and the fourth external electronic device 250 by the speed of light (a constant) (e.g., c).

It is possible to calculate the time difference of arrival between the electronic device 210 according to various embodiments and multiple electronic devices in the mesh network form as shown in FIG. 10 and thus the position of the electronic device 210 may be accurately measured. Accordingly, accurate positioning of the electronic device 210 is possible even in a non-line of sight (NLoS) state of the first external electronic device 220 and the external electronic device 210 or in a state in which link quality is not good.

FIG. 11 is a diagram explaining a method for calculating a value for compensating for a clock drift and a time difference of arrival between an electronic device and multiple external electronic devices according to an embodiment of the disclosure.

FIG. 11 according to various embodiments is a diagram illustrating a method for calculating a time difference of arrival in an SS-TWR manner.

Referring to FIG. 11, in a diagram 1100, the first external electronic device 220 may transmit a first message (e.g., a poll message) for range measurement in a range measurement period. The second external electronic device 230 having received the first message transmitted by the first external electronic device 220 may transmit a second message (e.g., a response message) including a response time in a broadcasting manner or transmit the second message to the first external electronic device 220 in a unicasting manner, in response to the first message. The first message and the second message including the response time may be received by the electronic device 210 existing in the same network.

In various embodiments, the electronic device 210 may calculate a time difference of arrival (TDoA) among the electronic device 210, the first external electronic device 220, and the second external electronic device 230, based on Equation 1 below.

【Equation 1】

$$TDoA = \frac{d_1 - d_0}{c} = (\alpha - \beta) - \frac{l_1}{c}$$

For example, in Equation 1, "$d_0$" may indicate a distance between the electronic device 210 and the first external electronic device 220, and "$d_1$" may indicate a distance between the electronic device 210 and the second external electronic device 230. "$l_1$" may indicate a distance between the first external electronic device 220 and the second external electronic device 230 and "$c$" may indicate the speed of light (constant). "$\alpha$" 1135 may indicate a difference between a reception time of the second message received by the electronic device 210 from the second external electronic device 230 and a reception time of the first message received by the electronic device 210 from the first external electronic device 220. "$\beta$" 1140 is a response time and may indicate a difference between a transmission time of the second message transmitted by the second external electronic device 230 and a reception time of the first message transmitted by the first external electronic device 220.

In various embodiments, the electronic device 210 may calculate a time difference of arrival (TDoA) among the electronic device 210, the first external electronic device 220, and the second external electronic device 230, based on a difference between "$\frac{d_1}{c}$" 1115 and "$\frac{d_0}{c}$" 1105. Alternatively, the electronic device 210 may calculate a difference value between "$\alpha$" 1135 and "$\beta$" 1140 and then calculate a time difference of arrival (TDoA) among the electronic device 210, the first external electronic device 220, and the second external electronic device 230, based on the calculated difference value and a difference value of "$\frac{l_1}{c}$" 1110.

In various embodiments, the electronic device 210 may calculate a value ε for compensating for a clock drift, based on Equation 2. For example, assuming that the electronic device 210 calculates a value for compensating for a clock drift with the second external electronic device 230, a value ε for compensating for a clock drift may be calculated based on a transmission time (e.g., $TX_{A2-1}$) of the second message (e.g., the second message (e.g., A2-1) firstly transmitted in the first range measurement period) firstly transmitted by the second external electronic device 230, a reception time (e.g., $RX_{A2-1}$) when the electronic device 210 receives the second message (e.g., A2-1), and a transmission time (e.g., $TX_{A2-2}$) of the fifth message (e.g., the fifth message (e.g., A2-2) secondly transmitted in the first range measurement period) secondly transmitted by the second external electronic device 230 and a reception time when the electronic device 210 receives the sixth message (e.g., A2-2).

【Equation 2】

$$\varepsilon = \frac{Tx_{A2\text{-}2} - Tx_{A2\text{-}1}}{Rx_{A2\text{-}2} - Rx_{A2\text{-}1}}$$

In an embodiment, the electronic device 210 may calculate a time difference of arrival as shown in Equation 3 below by applying a value $\varepsilon$ for compensating for a clock drift, which is calculated by using Equation 2, to Equation 1 described above.

【Equation 3】

$$TDoA = \frac{d_2 - d_1}{c} = (\varepsilon * (\alpha - \beta)) - \frac{l_1}{c}$$

In various embodiments, in case that a response message (e.g., the sixth message to the eighth message) secondly transmitted from the second external electronic device 230 to the fourth external electronic device 250 is omitted, the electronic device 210 may calculate a value $\varepsilon$ for compensating for a clock drift, based on Equation 4 below, which uses a frame of a next ranging block. The electronic device 210 may calculate a time difference of arrival as shown in Equation 3 below by applying a value $\varepsilon$ for compensating for a clock drift, which is calculated by using Equation 4 described above, to Equation 1. For example, assuming that the electronic device 210 calculates a value for compensating for a clock drift with the second external electronic device 230, a value $\varepsilon$ for compensating for a clock drift may be calculated based on a transmission time (e.g., TXA2,n) of the second message (e.g., A2) transmitted by the second external electronic device 230 in an n-th ranging block, a reception time (e.g., RXA2,n) of the second message (e.g., A2) received by the electronic device 210 in the n-th ranging block, a transmission time (e.g., TXA2,n+1) of the second message (e.g., A2) transmitted by the second external electronic device 230 in an (n+1)th ranging block, and a reception time (e.g., RXA2,n+1) of the second message (e.g., A2) received by the electronic device 210 in the (n+1)th ranging block.

【Equation 4】

$$\varepsilon = \frac{Tx_{A2,n+1} - Tx_{A2,n}}{Rx_{A2,n+1} - Rx_{A2,n}}$$

(n=Ranging block index)
In case that the first external electronic device 220 according to various embodiments is a reference clock, a time difference of arrival (TDoA) among the electronic device 210, the first external electronic device 220, and the second external electronic device 230, based on Equation 5 below.

【Equation 5】

$$TDoA = \frac{d_1 - d_0}{c} = ((\varepsilon_M * \alpha_{M,1}) - (\varepsilon_{A,1} * \beta_{R,1})) - \frac{l_1}{c}$$

($\varepsilon_M$: a clock drift rate of the electronic device 210 with respect to the first external electronic device 220, $\varepsilon_{A,1}$: a clock drift rate of the second external electronic device 230 to the first external electronic device 220, $\alpha_{M,1}$ 1150: a difference between a reception time when the electronic device 210 receives the first message transmitted by the first external electronic device 220 and a reception time when the electronic device 210 receives the second message transmitted by the second external electronic device 230, $\beta_{R,1}$ 1120: a transmission time difference of the second message transmitted by the first external electronic device 220, $l_{11}$: a distance between the first external electronic device 220 and the second external electronic device 230, c: the speed of light (constant))

In case that the second external electronic device 230 according to various embodiments is a reference clock, a time difference of arrival (TDoA) among the electronic device 210, the first external electronic device 220, and the second external electronic device 230 may be calculated based on Equation 6 below.

【Equation 6】

$$TDoA = \frac{d_1 - d_0}{c} = \left( \varepsilon_{M,R_1} * \left( \alpha_{M,1} - \beta_{R,1} \right) \right) - \frac{l_1}{c}$$

($\varepsilon_{M,R1}$: a clock drift rate of the electronic device 210 with respect to the first external electronic device 220, $\alpha_{M,1}$ 1150: a difference between a reception time when the electronic device 210 receives the first message transmitted by the first external electronic device 220 and a reception time when the electronic device 210 receives the second message transmitted by the second external electronic device 230, $\beta_{R,1}$ 1120: a transmission time difference of the second message transmitted by the first external electronic device 220, $l_1$: a distance between the first external electronic device 220 and the second external electronic device 230, c: the speed of light (constant))

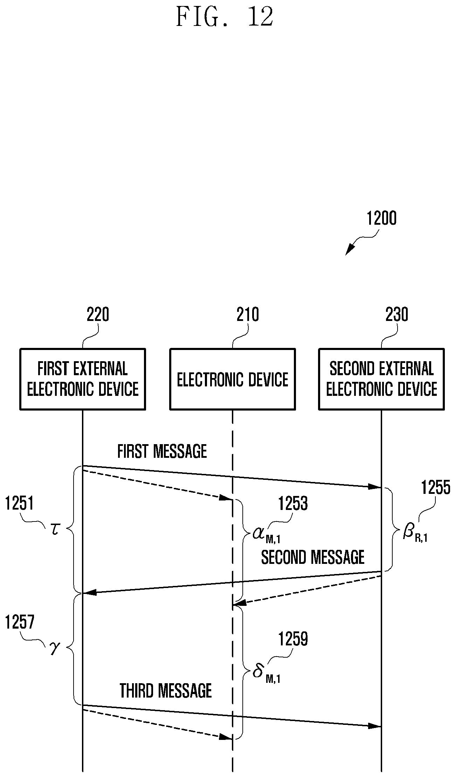

FIG. 12 is a diagram explaining a method for calculating a time difference of arrival between an electronic device and multiple external electronic devices according to an embodiment of the disclosure.

FIG. 12 according to various embodiments is a diagram illustrating a method for calculating a time difference of arrival in a DS-TWR manner.

Referring to FIG. 12, in a diagram 1200, the first external electronic device 220 may transmit a first message (e.g., a poll message) for range measurement in a range measurement period. The second external electronic device 230 having received the first message transmitted by the first external electronic device 220 may transmit (e.g., transmit in a broadcasting manner or transmit a second message to the first external electronic device 220 in a unicasting manner) a second message (e.g., a response message) including a response time in response to the first message. The first external electronic device 220 may transmit (e.g., transmit in a broadcasting manner or transmit a third message to the second external electronic device 230 in a unicasting manner) a third message (e.g., a final message) in response to the second message. The first message, the second message including the response time, and the third message may be received by the electronic device 210 existing in the same network.

In an embodiment, in a DS-TWR manner, the electronic device 210 may calculate a time difference of arrival (TDoA) among the electronic device 210, the first external electronic device 220, and the second external electronic device 230 by applying a clock drift rate (e.g., $\varepsilon_M$ and $\varepsilon_{A,1}$) calculated by using Equation 8, Equation 9, or Equation 10 to Equation 7. For example, the electronic device 210 may obtain a response time (e.g., $\beta_{R,1}$ 1255) included in the second message (e.g., a response message) transmitted by the second external electronic device 230. The electronic device 210 may obtain $\gamma$ 1257 from the third message (e.g., a final message) transmitted by the first external electronic device 220.

【Equation 7】

$$TDoA = \frac{d_1 - d_0}{c} = \frac{(\alpha - \delta) - (\beta - \gamma)}{2} = \frac{\varepsilon_M * (\alpha_{M,1} - \delta_{M,1}) - (\varepsilon_{A,1} * \beta_{R,1} - \gamma)}{2}$$

【Equation 8】

$$\varepsilon_M = \frac{\tau + \gamma}{\alpha_{M,1} + \delta_{M,1}}$$

In Equation 8 according to various embodiments, "$\varepsilon_M$" may indicate a clock drift rate of the electronic device 210 with respect to the first external electronic device 220. "$\tau$ 1251 + $\gamma$ 1257" may indicate a difference between the transmission time of the third message (e.g., a final message) and the transmission time of the first message (e.g., a poll message). "$\alpha_{(M,1)}$ 1253+$\delta_{(M,1)}$ 1259" may indicate a difference between the reception time of the third message (e.g., a final message) and the reception time of the first message (e.g., a poll message).

【Equation 9】

$$\varepsilon_{A,1} = \frac{Tx_{poll,k+1} - Tx_{poll,k}}{Rx_{poll,k+1} - Rx_{poll,k}}$$

【Equation 10】

$$\varepsilon_{A,1} = \frac{Tx_{final,k} - Tx_{poll,k}}{Rx_{final,k+1} - Rx_{poll,k}}$$

In Equation 9 and Equation 10 according to various embodiments, "$\varepsilon_{(A,1)}$" may indicate a clock drift rate of the second external electronic device 230 and the first external electronic device 220. In Equation 9, "$Tx_{(poll,k)}$" may indicate a transmission time of the first message (e.g., a poll message) transmitted by the first external electronic device 220, and "$Rx_{(poll,k)}$" may indicate a reception time when the second external electronic device 230 receives the first message (e.g., a poll message) transmitted by the first external electronic device 220, which is measured by the second external electronic device 230 in a k-th ranging block. In Equation 10, "$Tx_{(final,k)}$" may indicate a transmission time of the third message (e.g., a final message) transmitted by the first external electronic device 220, and "$Rx_{(final,k)}$" may indicate a reception time when the second external electronic device 230 receives the third message (e.g., a final message) transmitted by the first external electronic device 220, which is measured by the second external electronic device 230 in a k-th ranging block.

In various embodiments, in a ranging block, the electronic device 210 and the second external electronic device 230 may update "$\varepsilon_M$" and "$\varepsilon_A$" to compensate a runtime and a clock drift in a band.

Referring to FIGS. 2, 3, 4A, 4B, 5A, 5B, 6A, 6B, and 7 to 12 according to various embodiments, it has been described that the first external electronic device 220 operates as an initiator and three external electronic devices, for example, the second external electronic device 230, the third external electronic device 240, and the fourth external electronic device 250 operate as responders, but is not limited thereto. For example, the external electronic devices operating as responders may include N number of external electronic devices exceeding three. An N-th external electronic device may transmit a response message including a response time using a reception time of a message received from the first external electronic device 220, the second external electronic device 230, a third external electronic device 240,..., and/or an (N-1)th external electronic device.

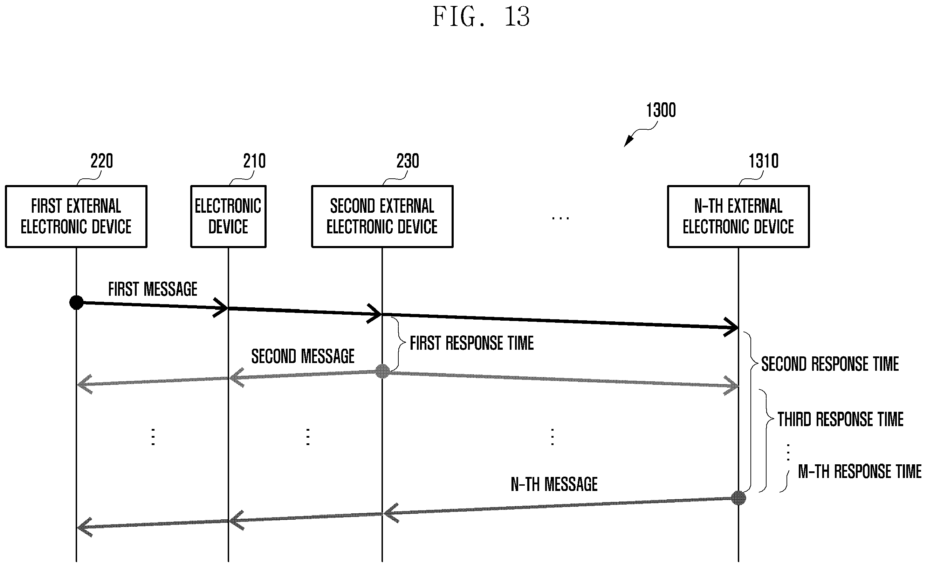

FIG. 13 is a diagram 1300 illustrating a signal flow between an electronic device 210 and multiple external electronic devices 220, 230,..., 1310 according to an embodiment of the disclosure.

FIG. 13 according to various embodiments is a diagram illustrating an operation of message transmission/reception between the electronic device 210 and external electronic devices (e.g., the first external electronic device 220, the second external electronic device 230,..., the N-th external electronic device 1310) in an SS-TWR manner.

Referring to FIG. 13, the first external electronic device 220 may transmit a first message (e.g., a poll message) for range measurement in a range measurement period (e.g., a ranging round).

In an embodiment, the second external electronic device 230 may transmit a second message (e.g., a response message) to the first external electronic device 220 in response to the first message. The electronic device 210,..., and the N-th external electronic device 1310 existing in the same network may snip and receive the second message transmitted by the second external electronic device 230 to the first external electronic device 220. For another example, the second external electronic device 230 may broadcast the second message (e.g., a response message) in response to the first message. The electronic device 210, the first external electronic device 220,..., and the N-th external electronic device 1310 may receive the second message broadcasted by the second external electronic device 230.

In an embodiment, the second external electronic device 230 may transmit the second message including time information. For example, the second external electronic device 230 may calculate a first response time with respect to a difference between a reception time of the first message transmitted by the first external electronic device 220 and a transmission time of the second message (e.g., a response message) to be transmitted by the second external electronic device 230 in response to the first message. The time information included in the second message may include at least one of the calculated first response time, a reception time when the second external electronic device 230 receives the first message transmitted by the first external electronic device 220, or a transmission time of the second message.

In an embodiment, the N-th external electronic device 1310 may transmit an N-th message (e.g., a response message) to the first external electronic device 220 in response to the first message. The electronic device 210, the second external electronic device 230, and..., the (N-1)th external electronic device (not shown) existing in the same network may snip and receive the N-th message transmitted by the N-th external electronic device 1310 to the first external electronic device 220. For another example, the N-th external electronic device 1310 may broadcast the N-th message (e.g., a response message) in response to the first message. The electronic device 210, the first external electronic device 220, the second external electronic device 230,..., and the (N-1)th external electronic device (not shown) may receive the N-th message broadcasted by the N-th external electronic device 1310.

In an embodiment, the N-th external electronic device 1310 may transmit the N-th message including time information. For example, the N-th external electronic device 1310 may calculate a second response time with respect to a difference between a reception time of the first message transmitted by the first external electronic device 220 and a transmission time of the N-th message (e.g., a response message) to be transmitted by the N-th external electronic device 1310 in response to the first message. In addition, the N-th external electronic device 1310 may calculate a third response time with respect to a difference between a reception time of the second message received from the second external electronic device 230 and a transmission time of the N-th message (e.g., a response message) to be transmitted by the N-th external electronic device 1310 in response to the first message. In addition, the N-th external electronic device 1310 may calculate an M-th response time with respect to a difference between a reception time of the (N-1)th message received from the (N-1)th external electronic device (not shown) and a transmission time of the N-th message (e.g., a response message) to be transmitted by the fourth external electronic device 250 in response to the first message. The time information included in the N-th message may include the calculated second response time, the third response time, the M-th response time, the reception time when the N-th external electronic device 1310 receives the first message, a reception time when the N-th external electronic device 1310 receives the second message, the reception time when the N-th external electronic device 1310 receives the (N-1)th message, and/or the transmission time of the N-th message.

In various embodiments, the electronic device 210 may calculate a time difference of arrival between the electronic device 210 and multiple electronic devices based on the messages including the response time received from external electronic devices (e.g., first external electronic device 220, the second external electronic device 230,..., and the N-th external electronic device 1310), the reception time when each external electronic device receives a message from other external electronic device, and/or the transmission time when each external electronic device and other external electronic device transmit a message, and measure a position of the electronic device 210 based thereon.

In various embodiments, although not shown in the drawings, the electronic device 210 may transfer the calculated time difference of arrival to a server managing a cluster (e.g., the cluster in FIG. 2). The electronic device 210 may determine a position of the electronic device 210 by using information received from the server.

In various embodiments, after the N-th message including time information is transmitted by the N-th external electronic device 1310, the operations in FIG. 8 described above may be performed. For example, the electronic device 210 and multiple external electronic devices 220, 230,..., 1310 may perform an operation of transmitting/receiving an

(N+1)th message (e.g., a final message) to an (N+P)th message to compensate a clock drift between the electronic device 210 and the multiple external electronic devices 220, 230,..., 1310. Without limitation thereto, the operations in FIG. 9 from which the operation of transmitting the (N+1)th message (e.g., a final message) by the first external electronic device 220 is omitted may be performed.

In various embodiments, by performing the operation of transmitting/receiving the (N+1)th message (e.g., a final message) to the (N+P)th message between the electronic device 210 and multiple external electronic devices 220, 230,..., 1310, the electronic device 210 may compensate a clock drift with the multiple external electronic devices 220, 230,..., 1310. The electronic device 210 may calculate a time difference of arrival between the electronic device 210 and the multiple external electronic devices 220, 230,..., 1310 based on the compensated clock drift, and measure a position of the electronic device 210 based thereon.

A positioning system according to various embodiments may include an electronic device 210 and N number of external electronic devices 220, 230,..., 1310, wherein a first external electronic device 220 among the N number of external electronic devices 220, 230,..., 1310 may transmit a first message for range measurement in a first range measurement period, second to N-th external electronic devices 230,..., 1310 among the N number of external electronic devices 220, 230,..., 1310 may transmit second to N-th messages in response to the first message, and the electronic device 210 may receive the first message and the second to N-th messages, calculate a time difference of arrival with the N number of external electronic devices 220, 230,..., 1310, based on a reception time of the received first message and time information included in each of the second to N-th messages, and measure a position of the electronic device 210, based on the calculated time difference of arrival, and wherein the information included in the second message may include a reception time when the second external electronic device 230 receives the first message, a transmission time of the second message, and/or a first response time with respect to a difference between the reception time when the second external electronic device 230 receives the first message and the transmission time of the second message and time information included in the N-th message may include a reception time when the N-th external electronic device 1310 receives the first message, a transmission time of the N-th message, a second response time with respect to a difference between the reception time of the first message and the transmission time of the N-th message, a reception time when the N-th external electronic device 1310 receives the second message, a third response time with respect to a difference between the reception time of the second message and the transmission time of the N-th message, a reception time when the N-th external electronic device receives 1310 an (N-1)th message transmitted by an (N-1)th external electronic device, and/or an M-th response time with respect to a difference between the reception time of the (N-1)th message and the transmission time of the N-th message.

The scenario referring to FIGS. 2, 3, 4A, 4B, 5A, 5B, 6A, 6B, and 7 to 13 according to various embodiments may be applied to a payment service, a navigation service, or a door lock service. For example, in case of entering a specific space (e.g., a shopping mall or entrance), the electronic device 210 may activate UWB communication by using a low power communication module such as Bluetooth low energy (BLE). For example, in case that it is possible to communicate with multiple external electronic devices by using BLE, Wi-Fi, and out-of-band, the electronic device 210 may activate UWB communication. Based on the embodiments referring to FIGS. 2, 3, 4A, 4B, 5A, 5B, 6A, 6B, and 7 to 12, the electronic device 210 may receive multiple messages including a reception time or a transmission time of a message transmitted or received among multiple external electronic devices from the multiple external electronic devices (e.g., the first external electronic device 220, the second external electronic device 230, the third external electronic device 240, and the fourth external electronic device 250). The electronic device 210 may measure a position of the electronic device 210 based on the reception time and the transmission time of the message included in the received messages, and may perform a specific function, for example, a payment function, a navigation function, or a function of opening a door lock.

While the disclosure has been shown and described with reference to various embodiments thereof, it will be understood by those skilled in the art that various changes in form and details may be made therein without departing from the spirit and scope of the disclosure as defined by the appended claims and their equivalents.

**Claims**

1. An electronic device comprising:

   a communication circuit;
   a memory; and
   at least one processor operatively connected to the communication circuit and the memory,
   wherein the at least one processor is configured to:

      transmit, through the communication circuit, a first message for range measurement in a first range measurement period,
      receive, through the communication circuit, a second message comprising a first response time, the second message being transmitted by a first external electronic device in response to the first message,
      receive, through the communication circuit, a third message comprising a second response time and a third response time, the third message being transmitted by a second external electronic device in response to the first message, and
      receive, through the communication circuit, a fourth message comprising a fourth response time, a fifth response time, and a sixth response time, the fourth message being transmitted by a third external electronic device in response to the first message,

wherein the first response time is a difference between a reception time when the first external electronic device receives the first message and a transmission time of the second message,

wherein the second response time is a difference between a reception time when the second external electronic device receives the first message and a transmission time of the third message,

wherein the third response time is difference between a reception time when the second external electronic device receives the second message and the transmission time of the third message,

wherein the fourth response time is a difference between a reception time when the third external electronic device receives the first message and a transmission time of the fourth message,

wherein the fifth response time is a difference between a reception time when the third external electronic device receives the second message and the transmission time of the fourth message, and

wherein the sixth response time is a difference between a reception time when the third external electronic device receives the third message and the transmission time of the fourth message.

2. The electronic device of claim 1, wherein the at least one processor is further configured to:

transmit, through the communication circuit, a fifth message comprising a seventh response time, an eighth response time, and a ninth response time,

in case that a sixth message comprising a transmission time and transmitted by the first external electronic device is received through the communication circuit in response to the fifth message, store a reception time of the sixth message,

in case that a seventh message comprising a transmission time and transmitted by the second external electronic device is received through the communication circuit in response to the fifth message, store a reception time of the seventh message, and

in case that an eighth message comprising a transmission time and transmitted by the third external electronic device is received through the communication circuit in response to the fifth message, store a reception time of the eighth message,

wherein the seventh response time is a difference between a reception time of the second message received from the first external electronic device and a transmission time of the fifth message,

wherein the eighth response time is a difference between a reception time of the third message received from the second external electronic device and the transmission time of the fifth message, and

wherein the ninth response time is a difference between a reception time of the fourth message received from the third external electronic device and the transmission time of the fifth message.

3. The electronic device of claim 2, wherein the sixth message comprises:

a tenth response time calculated by the first external electronic device with respect to a difference between a reception time of the third message which is received by the first external electronic device from the second external electronic device and a transmission time of the sixth message transmitted by the first external electronic device,

an eleventh response time calculated by the first external electronic device with respect to a difference between a reception time of the fourth message which is received by the first external electronic device from the third external electronic device and the transmission time of the sixth message transmitted by the first external electronic device, and

a twelfth response time calculated by the first external electronic device with respect to a difference between a reception time of the fifth message which is received by the first external electronic device from the electronic device and the transmission time of the sixth message transmitted by the first external electronic device,

wherein the seventh message comprises:

a thirteenth response time calculated by the second external electronic device with respect to a difference between a reception time of the fourth message which is received by the second external electronic device from the third external electronic device and a transmission time of the seventh message transmitted by the second external electronic device;

a fourteenth response time calculated by the second external electronic device with respect to a difference between a reception time of the fifth message which is received by the second external electronic device from the electronic device and the transmission time of the seventh message transmitted by the second external electronic device, and

a fifteenth response time calculated by the second external electronic device with respect to a difference between a reception time of the sixth message which is received by the second external electronic device from the first external electronic device and the transmission time of the seventh message transmitted by the second external electronic device, and

wherein the eighth message comprises:

a sixteenth response time calculated by the third external electronic device with respect to a difference between a reception time of the fifth message which is received by the third external electronic device from the electronic device and a transmission time of the eighth message transmitted by the third external electronic device,

a seventeenth response time calculated by the third external electronic device with respect to a difference between a reception time of the sixth message which is received by the third external electronic device from the first external electronic device and the transmission time of the eighth message transmitted by the third external electronic device, and

an eighteenth response time calculated by the third external electronic device with respect to a difference between a reception time of the seventh message which is received by the third external electronic device from the second external electronic device and the transmission time of the eighth message transmitted by the third external electronic device.

4. The electronic device of claim 1, wherein the at least one processor is further configured to:

store a reception time of the second message, a reception time of the third message, and a reception time of the fourth message in the memory,

in case that a fifth message comprising a transmission time and transmitted by the first external electronic device is received through the communication circuit, store a reception time of the fifth message in the memory,

in case that a sixth message comprising a transmission time and transmitted by the second external electronic device is received through the communication circuit, store a reception time of the sixth message in the memory, and

in case that a seventh message comprising a transmission time and transmitted by the third external electronic device is received through the communication circuit, store a reception time of the seventh message in the memory.

5. An electronic device comprising:

a communication circuit;
a memory; and
at least one processor operatively connected to the communication circuit and the memory,
wherein the at least one processor is configured to:

in case that a first message for range measurement transmitted by a first external electronic device is received through the communication circuit, store a reception time of the first message in the memory,

in case that a second message comprising a first response time is received from a second external electronic device through the communication circuit in response to the first message, store the first response time, and a reception time and a transmission time of the second message in the memory,

in case that a third message comprising a second response time and a third response time is received from a third external electronic device in response to the first message, store the second response time, the third response time, and a reception time and a transmission time of the third message in the memory, and

in case that a fourth message comprising a fourth response time, a fifth response time, and a sixth response time is received from a fourth external electronic device in response to the first message, store the fourth response time, the fifth response time, the sixth response time, and a reception time and a transmission time of the fourth message in the memory.

6. The electronic device of claim 5, wherein the at least one processor is further configured to:

calculate a time difference of arrival (TDoA) between the electronic device and the first external electronic device, the second external electronic device, the third external electronic device, and the fourth external electronic device based on the first response time, the second response time, the third response time, the fourth response time, the fifth response time, and the sixth response time, and

measure a position of the electronic device based on the calculated TDoA.

7. The electronic device of claim 5, wherein the at least one processor is further configured to:

compensate for a clock drift between the electronic device and the first external electronic device, the second external electronic device, the third external electronic device, and the fourth external electronic device based on a reception time of the first message, a reception time and the transmission time of the second message, a reception time and the transmission time of the third message, a reception time and the transmission time of the fourth message, a reception time of a fifth message, a reception time and a transmission time of a sixth message, a reception time and a transmission time of a seventh message, and a reception time and a transmission time of an eighth message,

calculate a TDoA between the electronic device and the first external electronic device, the second external electronic device, the third external electronic device, and the fourth external electronic device based on the compensated clock drift, and

measure a position of the electronic device based on positions of multiple external electronic devices, based on the calculated TDoA.

8. The electronic device of claim5, wherein the at least one processor is further configured to:

in case that the fifth message comprising a seventh response time, an eighth response time, and a ninth response time and transmitted by the first external electronic device is received through the communication circuit, store a reception time of the fifth message in the memory,

in case that a sixth message comprising a transmission time and transmitted by the second external electronic device is received through the communication circuit in response to the fifth message, store a reception time and a transmission time of the sixth message in the memory,

in case that a seventh message comprising a transmission time and transmitted by the third external electronic device is received through the communication circuit in response to the fifth message, store a reception time and a transmission time of the seventh message in the memory, and

in case that an eighth message comprising a transmission time and transmitted by the fourth external electronic device is received from through the communication circuit in response to the fifth message, store a reception time and a transmission time of the eighth message in the memory,

wherein the seventh response time is a difference between a reception time of the second message which is received by the first external electronic device from the second external electronic device and a transmission time of the fifth message transmitted by the first external electronic device,

wherein the eighth response time is a difference between a reception time of the third message which is received by the first external electronic device from the third external electronic device and the transmission time of the fifth message transmitted by the first external electronic device, and

wherein the ninth response time is a difference between a reception time of the fourth message which is received by the first external electronic device from the fourth external electronic device and the transmission time of the fifth message transmitted by the first external electronic device.

9. The electronic device of claim 8,

wherein the sixth message comprises:

a tenth response time calculated by the second external electronic device with respect to a difference between a reception time of the third message which is received by the second external electronic device from the third external electronic device and the transmission time of the sixth message transmitted by the second external electronic device,

an eleventh response time calculated by the second external electronic device with respect to a difference between a reception time of the fourth message which is received by the second external electronic device from the fourth external electronic device and the transmission time of the sixth message transmitted by the second external electronic device, and

a twelfth response time calculated by the second external electronic device with respect to a difference between a reception time of the fifth message which is received by the second external electronic device from the first external electronic device and the transmission time of the sixth message transmitted by the second external electronic device,

43

wherein the seventh message comprises:

a thirteenth response time calculated by the third external electronic device with respect to a difference between a reception time of the fourth message which is received by the third external electronic device from the fourth external electronic device and a transmission time of the seventh message transmitted by the third external electronic device,
an fourteenth response time calculated by the third external electronic device with respect to a difference between a reception time of the fifth message which is received by the third external electronic device from the first external electronic device and the transmission time of the seventh message transmitted by the third external electronic device, and
a fifteenth response time calculated by the third external electronic device with respect to a difference between a reception time of the sixth message which is received by the third external electronic device from the second external electronic device and the transmission time of the seventh message transmitted by the third external electronic device, and

wherein the eighth message comprises:

a sixteenth response time calculated by the fourth external electronic device with respect to a difference between a reception time of the fifth message which is received by the fourth external electronic device from the first external electronic device and a transmission time of the eighth message transmitted by the fourth external electronic device,
a seventeenth response time calculated by the fourth external electronic device with respect to a difference between a reception time of the sixth message which is received by the fourth external electronic device from the second external electronic device and the transmission time of the eighth message transmitted by the fourth external electronic device, and
an eighteenth response time calculated by the fourth external electronic device with respect to a difference between a reception time of the seventh message which is received by the fourth external electronic device from the third external electronic device and the transmission time of the eighth message transmitted by the fourth external electronic device.

10. A method for measuring a position of an electronic device, the method comprising:

transmitting, through a communication circuit, a first message for range measurement in a first range measurement period;
receiving, through the communication circuit, a second message comprising a first response time, the second message being transmitted by a first external electronic device in response to the first message;
receiving, through the communication circuit, a third message comprising a second response time, and a third response time, the third message being transmitted by a second external electronic device in response to the first message; and
receiving, through the communication circuit, a fourth message comprising a fourth response time, a fifth response time, and a sixth response time, the fourth message being transmitted by a third external electronic device in response to the first message,
wherein the first response time is a difference between a reception time when the first external electronic device receives the first message and a transmission time of the second message,
wherein the second response time is a difference between a reception time when the second external electronic device receives the first message and a transmission time of the third message,
wherein the third response time is difference between a reception time when the second external electronic device receives the second message and the transmission time of the third message,
wherein the fourth response time is a difference between a reception time when the third external electronic device receives the first message and a transmission time of the fourth message,
wherein the fifth response time is a difference between a reception time when the third external electronic device receives the second message and the transmission time of the fourth message, and
wherein the sixth response time is a difference between a reception time when the third external electronic device receives the third message and the transmission time of the fourth message.

11. The method of claim 10, further comprising:

transmitting, through the communication circuit, a fifth message comprising a seventh response time, an eighth response time, and a ninth response time;

in case that a sixth message comprising a transmission time and transmitted by the first external electronic device is received through the communication circuit in response to the fifth message, storing a reception time of the sixth message in a memory;

in case that a seventh message comprising a transmission time and transmitted by the second external electronic device is received through the communication circuit in response to the fifth message, storing a reception time of the seventh message in the memory; and

in case that an eighth message comprising a transmission time and transmitted by the third external electronic device is received through the communication circuit in response to the fifth message, storing a reception time of the eighth message in the memory,

wherein the seventh response time is a difference between a reception time of the second message received from the first external electronic device and a transmission time of the fifth message,

wherein the eighth response time is a difference between a reception time of the third message received from the second external electronic device and the transmission time of the fifth message, and

wherein the ninth response time is a difference between a reception time of the fourth message received from the third external electronic device and the transmission time of the fifth message.

12. The method of claim 11, wherein the sixth message comprises:

a tenth response time calculated by the first external electronic device with respect to a difference between a reception time of the third message which is received by the first external electronic device from the second external electronic device and a transmission time of the sixth message transmitted by the first external electronic device,

an eleventh response time calculated by the first external electronic device with respect to a difference between a reception time of the fourth message which is received by the first external electronic device from the third external electronic device and the transmission time of the sixth message transmitted by the first external electronic device, and

a twelfth response time calculated by the first external electronic device with respect to a difference between a reception time of the fifth message which is received by the first external electronic device from the electronic device and the transmission time of the sixth message transmitted by the first external electronic device,

wherein the seventh message comprises:

a thirteenth response time calculated by the second external electronic device with respect to a difference between a reception time of the fourth message which is received by the second external electronic device from the third external electronic device and a transmission time of the seventh message transmitted by the second external electronic device,

a fourteenth response time calculated by the second external electronic device with respect to a difference between a reception time of the fifth message which is received by the second external electronic device from the electronic device and the transmission time of the seventh message transmitted by the second external electronic device, and

a fifteenth response time calculated by the second external electronic device with respect to a difference between a reception time of the sixth message which is received by the second external electronic device from the first external electronic device and the transmission time of the seventh message transmitted by the second external electronic device, and

wherein the eighth message comprises:

a sixteenth response time calculated by the third external electronic device with respect to a difference between a reception time of the fifth message which is received by the third external electronic device from the electronic device and a transmission time of the eighth message transmitted by the third external electronic device,

a seventeenth response time calculated by the third external electronic device with respect to a difference between a reception time of the sixth message which is received by the third external electronic device from the first external electronic device and the transmission time of the eighth message transmitted by the third external electronic device, and

an eighteenth response time calculated by the third external electronic device with respect to a difference between a reception time of the seventh message which is received by the third external electronic device from the second external electronic device and the transmission time of the eighth message transmitted by the third external electronic device.

**13.** A method for measuring a position of an electronic device, the method comprising:

in case that a first message for range measurement transmitted by a first external electronic device is received through a communication circuit, storing a reception time of the first message in a memory;

in case that a second message comprising a first response time is received from a second external electronic device through the communication circuit in response to the first message, storing the first response time, and a reception time and a transmission time of the second message in the memory;

in case that a third message comprising a second response time and a third response time is received from a third external electronic device in response to the first message, storing the second response time, the third response time, and a reception time and a transmission time of the third message in the memory; and

in case that a fourth message comprising a fourth response time, a fifth response time, and a sixth response time is received from a fourth external electronic device in response to the first message, storing the fourth response time, the fifth response time, the sixth response time, and a reception time and a transmission time of the fourth message in the memory.

**14.** The method of claim 13, further comprising:

compensating for a clock drift between the electronic device and the first external electronic device, the second external electronic device, the third external electronic device, and the fourth external electronic device based on a reception time of the first message, a reception time and the transmission time of the second message, a reception time and the transmission time of the third message, a reception time and the transmission time of the fourth message, a reception time of a fifth message, a reception time and a transmission time of a sixth message, a reception time and a transmission time of a seventh message, and a reception time and a transmission time of an eighth message;

calculating a TDoA between the electronic device and the first external electronic device, the second external electronic device, the third external electronic device, and the fourth external electronic device based on the compensated clock drift; and

measuring a position of the electronic device based on positions of multiple external electronic devices, based on the calculated TDoA.

**15.** A positioning system comprising:

an electronic device; and

N number of external electronic devices,

wherein a first external electronic device among the N number of external electronic devices transmits a first message for range measurement in a first range measurement period,

wherein a second to N-th external electronic devices among the N number of external electronic devices transmit second to N-th messages in response to the first message,

wherein the electronic device receives the first message and the second to N-th messages, calculates a time difference of arrival (TDoA) with the N number of external electronic devices, based on a reception time of the received first message and time information included in each of the second to N-th messages, and measures a position of the electronic device based on the calculated TDoA,

wherein time information included in the second message comprises:

at least one of a reception time when the second external electronic device receives the first message, a transmission time of the second message, or

a first response time with respect to a difference between a reception time when the second external electronic device receives the first message and a transmission time of the second message, and

wherein time information included in the N-th message comprises:

at least one of a reception time when the N-th external electronic device receives the first message, a transmission time of the N-th message, a second response time with respect to a difference between a reception time of the first message and a transmission time of the N-th message, a reception time when the N-th external electronic device receives the second message, a third response time with respect to a difference between a reception time of the second message and a transmission time of the N-th message, a reception time when the N-th external electronic device receives an (N-1)th message transmitted by an (N-1)th external electronic device, or

an M-th response time with respect to a difference between the reception time of the (N-1)th message and the transmission time of the N-th message.

# FIG. 1

EP 4 428 563 A1

FIG. 2

EP 4 428 563 A1

# FIG. 3

300

310
COMMUNICATION CIRCUIT

330
PROCESSOR

320
MEMORY

FIG. 4A

400

START

TRANSMIT FIRST MESSAGE FOR RANGE MEASUREMENT — 405

IN CASE THAT SECOND MESSAGE INCLUDING FIRST RESPONSE TIME IS RECEIVED FROM SECOND EXTERNAL ELECTRONIC DEVICE IN RESPONSE TO FIRST MESSAGE, STORE RECEPTION TIME OF SECOND MESSAGE — 410

IN CASE THAT THIRD MESSAGE INCLUDING SECOND AND THIRD RESPONSE TIMES IS RECEIVED FROM THIRD EXTERNAL ELECTRONIC DEVICE IN RESPONSE TO FIRST MESSAGE, STORE RECEPTION TIME OF THIRD MESSAGE — 415

IN CASE THAT FOURTH MESSAGE INCLUDING FOURTH, FIFTH, AND SIXTH RESPONSE TIMES IS RECEIVED FROM FOURTH EXTERNAL ELECTRONIC DEVICE, STORE RECEPTION TIME OF FOURTH MESSAGE — 420

END

# FIG. 4B

450

```
          ┌──────────────┐
          │    START     │
          └──────┬───────┘
                 │
                 ▼
```

| TRANSMIT FIFTH MESSAGE INCLUDING SEVENTH, EIGHTH, AND NINTH RESPONSE TIMES | 455 |

| IN CASE THAT SIXTH MESSAGE INCLUDING TRANSMISSION TIME AND TRANSMITTED BY SECOND EXTERNAL ELECTRONIC DEVICE IS RECEIVED IN RESPONSE TO FIFTH MESSAGE, STORE RECEPTION TIME OF SIXTH MESSAGE | 460 |

| IN CASE THAT SEVENTH MESSAGE INCLUDING TRANSMISSION TIME AND TRANSMITTED BY THIRD EXTERNAL ELECTRONIC DEVICE IS RECEIVED IN RESPONSE TO FIFTH MESSAGE, STORE RECEPTION TIME OF SEVENTH MESSAGE | 465 |

| IN CASE THAT EIGHTH MESSAGE INCLUDING TRANSMISSION TIME AND TRANSMITTED BY FOURTH EXTERNAL ELECTRONIC DEVICE IS RECEIVED IN RESPONSE TO FIFTH MESSAGE, STORE RECEPTION TIME OF EIGHTH MESSAGE | 470 |

```
          ┌──────────────┐
          │     END      │
          └──────────────┘
```

# FIG. 5A

500

START

IN CASE THAT FIRST MESSAGE FOR RANGE MEASUREMENT IS RECEIVED FROM FIRST EXTERNAL ELECTRONIC DEVICE, STORE RECEPTION TIME OF FIRST MESSAGE — 505

IN CASE THAT SECOND MESSAGE INCLUDING FIRST RESPONSE TIME IS RECEIVED FROM SECOND EXTERNAL ELECTRONIC DEVICE IN RESPONSE TO FIRST MESSAGE, STORE RECEPTION TIME OF SECOND MESSAGE — 510

IN CASE THAT THIRD MESSAGE INCLUDING SECOND AND THIRD RESPONSE TIMES IS RECEIVED FROM THIRD EXTERNAL ELECTRONIC DEVICE IN RESPONSE TO FIRST MESSAGE, STORE RECEPTION TIME OF THIRD MESSAGE — 515

TRANSMIT FOURTH MESSAGE INCLUDING FOURTH, FIFTH, AND SIXTH RESPONSE TIMES AND TRANSMISSION TIME OF FOURTH MESSAGE TO BE TRANSMITTED IN RESPONSE TO FIRST MESSAGE — 520

END

# FIG. 5B

550

START

IN CASE THAT FIFTH MESSAGE IS RECEIVED FROM FIRST
EXTERNAL ELECTRONIC DEVICE, STORE RECEPTION TIME OF FIFTH
MESSAGE ~555

IN CASE THAT SIXTH MESSAGE INCLUDING TRANSMISSION TIME
AND TRANSMITTED BY SECOND EXTERNAL
ELECTRONIC DEVICE IS RECEIVED IN RESPONSE TO FIFTH MESSAGE,
STORE RECEPTION TIME OF SIXTH MESSAGE ~560

IN CASE THAT SEVENTH MESSAGE INCLUDING TRANSMISSION
TIME AND TRANSMITTED BY THIRD EXTERNAL ELECTRONIC DEVICE
IS RECEIVED IN RESPONSE TO FIFTH MESSAGE, STORE RECEPTION
TIME OF SEVENTH MESSAGE ~565

TRANSMIT EIGHTH MESSAGE INCLUDING TRANSMISSION TIME IN
RESPONSE TO FIFTH MESSAGE ~570

END

FIG. 6A

600

START

IN CASE THAT FIRST MESSAGE FOR RANGE MEASUREMENT TRANSMITTED BY FIRST EXTERNAL ELECTRONIC DEVICE IS RECEIVED, STORE RECEPTION TIME OF FIRST MESSAGE ⟩— 605

IN CASE SECOND MESSAGE INCLUDING FIRST RESPONSE TIME AND TRANSMITTED BY SECOND EXTERNAL ELECTRONIC DEVICE IS RECEIVED IN RESPONSE TO FIRST MESSAGE, STORE FIRST RESPONSE TIME, AND RECEPTION TIME AND TRANSMISSION TIME OF SECOND MESSAGE ⟩— 610

IN CASE THAT THIRD MESSAGE INCLUDING SECOND RESPONSE TIME AND THIRD RESPONSE TIME AND TRANSMITTED BY THIRD EXTERNAL ELECTRONIC DEVICE IS RECEIVED IN RESPONSE TO FIRST MESSAGE, STORE SECOND AND THIRD RESPONSE TIMES, AND RECEPTION TIME AND TRANSMISSION TIME OF THIRD MESSAGE ⟩— 615

IN CASE THAT FOURTH MESSAGE INCLUDING FOURTH, FIFTH, AND SIXTH RESPONSE TIMES AND TRANSMITTED BY FOURTH EXTERNAL ELECTRONIC DEVICE IS RECEIVED IN RESPONSE TO FIRST MESSAGE STORE FOURTH, FIFTH, AND SIXTH RESPONSE TIMES, AND RECEPTION TIME AND TRANSMISSION TIME OF FOURTH MESSAGE ⟩— 620

CALCULATE TIME DIFFERENCE OF ARRIVAL BETWEEN ELECTRONIC DEVICE AND MULTIPLE EXTERNAL ELECTRONIC DEVICES ⟩— 625

MEASURE POSITION OF ELECTRONIC DEVICE BASED ON CALCULATED TIME DIFFERENCE OF ARRIVAL ⟩— 630

END

# FIG. 6B

650

START

IN CASE THAT FIFTH MESSAGE IS RECEIVED FROM FIRST EXTERNAL ELECTRONIC DEVICE, STORE RECEPTION TIME OF FIFTH MESSAGE — 655

IN CASE THAT SIXTH MESSAGE INCLUDING TRANSMISSION TIME AND TRANSMITTED BY SECOND EXTERNAL ELECTRONIC DEVICE IS RECEIVED IN RESPONSE TO FIFTH MESSAGE, STORE RECEPTION TIME AND TRANSMISSION TIME OF SIXTH MESSAGE — 660

IN CASE THAT SEVENTH MESSAGE INCLUDING TRANSMISSION TIME AND TRANSMITTED BY THIRD EXTERNAL ELECTRONIC DEVICE IS RECEIVED IN RESPONSE TO FIFTH MESSAGE, STORE RECEPTION TIME AND TRANSMISSION TIME OF SEVENTH MESSAGE — 665

IN CASE THAT EIGHTH MESSAGE INCLUDING TRANSMISSION TIME AND TRANSMITTED BY FOURTH EXTERNAL ELECTRONIC DEVICE IS RECEIVED IN RESPONSE TO FIFTH MESSAGE, STORE RECEPTION TIME AND TRANSMISSION TIME OF EIGHTH MESSAGE — 670

COMPENSATE FOR CLOCK DRIFT BETWEEN ELECTRONIC DEVICE AND MULTIPLE EXTERNAL ELECTRONIC DEVICES — 675

CALCULATE TIME DIFFERENCE OF ARRIVAL BETWEEN ELECTRONIC DEVICE AND MULTIPLE EXTERNAL ELECTRONIC DEVICES BASED ON COMPENSATED CLOCK DRIFT — 680

MEASURE POSITION OF ELECTRONIC DEVICE BASED ON POSITIONS OF MULTIPLE EXTERNAL ELECTRONIC DEVICES, BASED ON CALCULATED TIME DIFFERENCE OF ARRIVAL — 685

END

# FIG. 7

700

| 220 | 210 | 230 | 240 | 250 |
|---|---|---|---|---|
| FIRST EXTERNAL ELECTRONIC DEVICE | ELECTRONIC DEVICE | SECOND EXTERNAL ELECTRONIC DEVICE | THIRD EXTERNAL ELECTRONIC DEVICE | FOURTH EXTERNAL ELECTRONIC DEVICE |

FIRST MESSAGE

FIRST RESPONSE TIME

SECOND MESSAGE

SECOND RESPONSE TIME

FOURTH RESPONSE TIME

THIRD MESSAGE

THIRD RESPONSE TIME

FIFTH RESPONSE TIME

FOURTH MESSAGE

SIXTH RESPONSE TIME

EP 4 428 563 A1

# FIG. 8

EP 4 428 563 A1

# FIG. 9

EP 4 428 563 A1

FIG. 10

EP 4 428 563 A1

FIG. 11

# FIG. 12

1200

220
FIRST EXTERNAL
ELECTRONIC DEVICE

210
ELECTRONIC DEVICE

230
SECOND EXTERNAL
ELECTRONIC DEVICE

FIRST MESSAGE

1251 $\tau$

1253 $\alpha_{M,1}$

1255 $\beta_{R,1}$

SECOND MESSAGE

1257 $\gamma$

1259 $\delta_{M,1}$

THIRD MESSAGE

# FIG. 13

FIG. 13

## INTERNATIONAL SEARCH REPORT

| | International application No. |
|---|---|
| | **PCT/KR2022/020305** |

**A. CLASSIFICATION OF SUBJECT MATTER**

**G01S 5/06**(2006.01)i; **H04W 64/00**(2009.01)i; **H04L 7/00**(2006.01)i; **H04W 88/02**(2009.01)i

According to International Patent Classification (IPC) or to both national classification and IPC

**B. FIELDS SEARCHED**

Minimum documentation searched (classification system followed by classification symbols)

G01S 5/06(2006.01); G01S 1/02(2010.01); G01S 1/20(2006.01); G01S 5/02(2010.01); G01S 5/10(2006.01); H04L 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위치 측정(position measurement), 응답 시간(response time), 도래시간차(Time Difference of Arrival, TDOA), 클럭(clock), 보정(compensation)

**C. DOCUMENTS CONSIDERED TO BE RELEVANT**

| Category* | Citation of document, with indication, where appropriate, of the relevant passages | Relevant to claim No. |
|---|---|---|
| A | KR 10-2019-0092687 A (PETARI INCORPORATION) 08 August 2019 (2019-08-08)<br>See paragraphs [0034]-[0097] and figures 4-9. | 1-15 |
| A | KR 10-0671283 B1 (KOREA ELECTROTECHNOLOGY RESEARCH INSTITUTE) 19 January 2007 (2007-01-19)<br>See claims 1-9 and figures 1 and 8. | 1-15 |
| A | KR 10-1814698 B1 (ENTO SOFT) 03 January 2018 (2018-01-03)<br>See paragraphs [0040]-[0063] and figures 4-6. | 1-15 |
| A | KR 10-2010-0123988 A (KOREA ELECTROTECHNOLOGY RESEARCH INSTITUTE) 26 November 2010 (2010-11-26)<br>See paragraphs [0021]-[0039] and figure 3. | 1-15 |
| A | US 2014-0364142 A1 (ROCKSTAR CONSORTIUM US LP) 11 December 2014 (2014-12-11)<br>See paragraphs [0008]-[0034] and figures 1 and 3. | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 March 2023** | **21 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/020305**

| Patent document cited in search report | | | Publication date (day/month/year) | Patent family member(s) | | | Publication date (day/month/year) |
|---|---|---|---|---|---|---|---|
| KR | 10-2019-0092687 | A | 08 August 2019 | None | | | |
| KR | 10-0671283 | B1 | 19 January 2007 | KR | 10-2005-0121176 | A | 26 December 2005 |
| | | | | US | 2005-0282558 | A1 | 22 December 2005 |
| | | | | US | 7411551 | B2 | 12 August 2008 |
| KR | 10-1814698 | B1 | 03 January 2018 | KR | 10-1836837 | B1 | 09 March 2018 |
| | | | | WO | 2019-059478 | A1 | 28 March 2019 |
| KR | 10-2010-0123988 | A | 26 November 2010 | KR | 10-1092209 | B1 | 08 December 2011 |
| US | 2014-0364142 | A1 | 11 December 2014 | BR | 112012013785 | A2 | 03 May 2016 |
| | | | | CA | 2782855 | A1 | 16 June 2011 |
| | | | | CN | 102762999 | A | 31 October 2012 |
| | | | | EP | 2510376 | A1 | 17 October 2012 |
| | | | | JP | 2013-513786 | A | 22 April 2013 |
| | | | | KR | 10-2012-0092156 | A | 20 August 2012 |
| | | | | RU | 2012125038 | A | 20 January 2014 |
| | | | | RU | 2510039 | C2 | 20 March 2014 |
| | | | | US | 2013-0137452 | A1 | 30 May 2013 |
| | | | | US | 8818406 | B2 | 26 August 2014 |
| | | | | WO | 2011-069552 | A1 | 16 June 2011 |
| | | | | WO | 2011-069684 | A1 | 16 June 2011 |

Form PCT/ISA/210 (patent family annex) (July 2022)